# EUROPÄISCHE PATENTANMELDUNG

(11) **EP 4 506 743 A1**
(43) Veröffentlichungstag der Anmeldung: **12.02.2025**
(21) Anmeldenummer: 24192311.9
(22) Anmeldetag: 01.08.2024
(51) Int. Cl.: G02B 6/44, G02B 6/42

(54) **LICHTWELLENLEITER-DURCHFÜHRUNG FÜR EINE VAKUUMKAMMER**

(30) Priorität: 09.08.2023 DE 102023121227
(71) Anmelder: Max-Planck-Gesellschaft zur Förderung der Wissenschaften e.V., 80539 München (DE)
(72) Erfinder: Zeidner, Wolfgang, 85748 Garching (DE); Gruber, Moritz, 85748 Garching (DE); Kaunert, Karlheinz, 85748 Garching (DE)
(74) Vertreter: v. Bezold & Partner Patentanwälte - PartG mbB

(57) **Zusammenfassung**

Die Erfindung betrifft eine Lichtwellenleiter-Durchführung (10), die zur Durchführung einer Vielzahl von Lichtwellenleitern (1) zwischen einem Inneren einer evakuierbaren Vakuumkammer (30) und einer Umgebung der Vakuumkammer (30) eingerichtet ist. Die Lichtwellenleiter-Durchführung (10) umfassend dabei mindestens einen Halteflansch (11a, 11b), der zur druckdichten Befestigung an der Vakuumkammer (30) eingerichtet ist und eine Vielzahl von Durchgangsöffnungen (12a, 12b) aufweist, die jeweils zur druckdichten Aufnahme von jeweils einem Lichtwellenleiter (1) der Vielzahl von Lichtwellenleitern (1) eingerichtet sind. Die Durchgangsöffnungen (12a, 12b) sind jeweils mit einer Dichtungsaufnahme (13a, 13b) und einem Dichtungselement (14a, 14b), der in der Dichtungsaufnahme (13a, 13b) zur druckdichten Aufnahme des jeweiligen Lichtwellenleiters (1) angeordnet ist, versehen. Ferner ist mit jedem Halteflansch (11a, 11b) jeweils eine Druckeinrichtung (15a, 15b) verbunden, die ausgebildet ist, die jeweiligen Dichtungselemente (14a, 14b) axial entlang den jeweiligen Durchgangsöffnungen (12a, 12b) zu komprimieren. Weiterhin betrifft die Erfindung eine Lichtwellenleiter-Anordnung (20) mit einer ebensolchen Lichtwellenleiter-Durchführung (10) sowie ein Verfahren zur Durchführung einer Vielzahl von Lichtwellenleitern (1) zwischen einem Inneren einer evakuierbaren Vakuumkammer (30) und einer Umgebung der Vakuumkammer (30) unter Verwendung der vorgenannten Lichtwellenleiter-Durchführung (10).

## Beschreibung

Die Erfindung betrifft eine Lichtwellenleiter-Durchführung zur Durchführung einer Vielzahl von Lichtwellenleitern zwischen einem Inneren einer evakuierbaren Vakuumkammer und einer Umgebung der Vakuumkammer. Ferner betrifft die Erfindung eine Lichtwellenleiter-Anordnung mit einer ebensolchen Lichtwellenleiter-Durchführung sowie ein Verfahren zur Durchführung einer Vielzahl von Lichtwellenleitern zwischen einem Inneren einer evakuierbaren Vakuumkammer und einer Umgebung der Vakuumkammer unter Verwendung einer solchen Lichtwellenleiter-Durchführung.

Um optische Signale zwischen dem Inneren einer Vakuumanlage und einer äußeren Umgebung durchzuleiten, sind im Stand der Technik entsprechende Durchführungsflansche bekannt. So existiert beispielsweise der Ansatz, Glasfaserleitungen in Durchgangslöchern eines Vakuumflansches zu positionieren und mittels Epoxidharzverklebungen fest mit dem Flansch zu verbinden. Nachteilig hieran ist, dass die festen und unflexiblen Verbindungen mit der Zeit bzw. infolge von Ausheizvorgängen oftmals undicht werden und die Flansche mitsamt den Glasfaserleitungen ersetzt werden müssen.

Weiterhin ist aus der DE 11 2019 006 860 T5 ein Flansch mit einer radial komprimierten Elastomerdichtung bekannt, durch die eine optische Faser geführt ist. Nachteilig hieran ist, dass durch die radial verpresste Dichtung möglicherweise eine beschränkte Dichtwirkung erzielt wird und mitunter ein hoher radialer Druck auf die optische Faser ausgeübt wird, was zu Transmissionsverlusten führen kann.

Aufgabe der Erfindung ist daher, eine verbesserte Lösung zur Durchführung einer Vielzahl von Lichtwellenleitern in eine bzw. aus einer Vakuumkammer bereitzustellen, mittels derer Nachteile von bisherigen Ansätzen vermieden werden können. Insbesondere ist es eine Aufgabe der Erfindung eine Lösung bereitzustellen, die eine möglichst dichte Durchführung einer Vielzahl Lichtwellenleiter ermöglicht und bevorzugt möglichst geringe Transmissionsverluste in den Lichtwellenleitern aufweist.

Diese Aufgaben werden durch eine Lichtwellenleiter-Durchführung, eine Lichtwellenleiter-Anordnung und ein Verfahren mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt der Offenbarung wird eine Lichtwellenleiter-Durchführung bereitgestellt. Bevorzugt ist die Lichtwellenleiter-Durchführung zur Durchführung einer Vielzahl von Lichtwellenleitern (z. B. Single-Mode-Glasfasern und/oder Multimode-Glasfasern) zwischen einem Inneren (z. B. Kammerinnenraum) einer evakuierbaren Vakuumkammer (evakuierbarer Raum, z. B. Ultrahochvakuumkammer) und einer (z. B. äußeren) Umgebung der Vakuumkammer eingerichtet.

Die Lichtwellenleiter-Durchführung umfasst dabei mindestens einen Halteflansch (z. B. einen CF-Flansch), der zur, vorzugsweise druckdichten, Befestigung an der Vakuumkammer eingerichtet ist und eine Vielzahl von Durchgangsöffnungen (z. B. Durchgangsbohrungen, insbesondere Flachsenkbohrungen) aufweist. Die Durchgangsöffnungen wiederum sind jeweils zur, vorzugsweise druckdichten, Aufnahme von jeweils einem Lichtwellenleiter der Vielzahl von Lichtwellenleitern eingerichtet. Beispielsweise kann jede der Durchgangsöffnung (der Vielzahl von Durchgangsöffnungen) jeweils einem Lichtwellenleiter (der Vielzahl von Lichtwellenleitern) zugeordnet sein und/oder einen an den jeweiligen Lichtwellenleiter angepassten Öffnungsquerschnitt aufweisen.

Ferner ist vorgesehen, dass die Durchgangsöffnungen jeweils mit einer Dichtungsaufnahme und einem Dichtungselement (z. B. in Form eines Metall-O-Rings und/oder Viton-O-Rings) versehen sind. Bevorzugt ist das (jeweilige) Dichtungselement dabei in der (jeweiligen) Dichtungsaufnahme zur, vorzugsweise druckdichten, Aufnahme des jeweiligen Lichtwellenleiters angeordnet.

Weiterhin ist vorgesehen, dass mit jedem Halteflansch jeweils eine Druckeinrichtung (z. B. eine Klemmeinrichtung) verbunden, vorzugsweise lösbar verbunden, ist. Die Druckeinrichtung ist hierbei ausgebildet, die jeweiligen Dichtungselemente (z. B. axial) entlang den jeweiligen Durchgangsöffnungen zu komprimieren, vorzugsweise, um dadurch ein radiales und/oder quer zur jeweiligen Durchgangsöffnung gerichtetes Expandieren der jeweiligen Dichtungselemente zu bewirken. Bevorzugt soll die Druckeinrichtung somit dazu ausgebildet sein, die jeweiligen Dichtungselemente (z. B. axial) entlang den jeweiligen Durchgangsöffnungen zu komprimieren, um dadurch auf die jeweiligen Lichtwellenleiter jeweils eine radial nach innen gerichtete Druck- und/oder Klemmkraft auszuüben. Beispielsweise kann die (jeweilige) Druckeinrichtung eine (z. B. am jeweiligen Halteflansch befestigte) Druckplatte umfassen, mittels derer bspw. die (axiale) Druck- und/oder Klemmkraft generierbar ist. Ferner kann die (jeweilige) Druckeinrichtung bspw. auch eine Vielzahl von Zwischenhülsen aufweisen (die z. B. jeweils zwischen der Druckplatte und einem der Dichtungselemente angeordnet sein können). Beispielsweise kann mittels der Zwischenhülsen die (axiale) Druck- und/oder Klemmkraft der Druckplatte zu den jeweiligen Dichtungselementen zuführbar sein. Bevorzugt weist jeder Halteflansch dabei jeweils (nur) eine einzige derartige Druckeinrichtung auf, die vorzugsweise mehreren der Dichtungselementen zugeordnet ist. Entsprechend kann die jeweilige Druckeinrichtung für ein (gleichzeitiges) Komprimieren mehrerer bzw. aller Dichtungselemente des jeweiligen Halteflanschs ausgebildet sein.

Auf vorteilhafte Weise kann dadurch insgesamt eine Lichtwellenleiter-Durchführung bereitgestellt werden, die eine druckdichte Aufnahme der Lichtwellenleiter ermöglicht. Durch die Druckeinrichtung kann dabei eine, bevorzugt einstellbare, axiale Druck- und/oder Klemmkraft auf die jeweiligen Dichtungselemente ausgeübt werden, wodurch diese in radialer Richtung expandieren und die jeweiligen Lichtwellenleiter umfangsseitig abdichten. Neben einem Einstellen der jeweiligen Druck- und/oder Klemmkraft erleichtert die (lösbare) Druckeinrichtung ferner auf vorteilhafte Weise auf die Wartung bzw. den Austausch von Lichtwellenleitern, da die Druckeinrichtung eine bessere Zugänglichkeit als einzeln komprimierte Dichtung in den jeweiligen Durchgangsöffnungen bietet.

Gemäß einem Aspekt kann der mindestens eine Halteflansch einen ersten Halteflansch und einen zweiten Halteflansch umfassen. Der erste Halteflansch kann dabei auch als Vakuumflansch und der zweite Halteflansch auch als Atmosphärenflansch bezeichnet werden. Bevorzugt ist der erste Halteflansch bzw. Vakuumflansch zur (z. B. druckdichten) Befestigung an der Vakuumkammer eingerichtet. Beispielsweise kann der erste Halteflansch mittels einer Schraubverbindung an einer Öffnung der Vakuumkammer (z. B. in Form eines zum Vakuumflansch korrespondierenden Flansch der Vakuumkammer) befestigbar sein. Hierzu kann der erste Halteflansch bspw. einen Halteflanschlochkreis mit Löchern zur Aufnahme von Befestigungselementen aufweisen.

Ferner kann der zweite Halteflansch bzw. Atmosphärenflansch, vorzugsweise druckdicht, an dem ersten Halteflansch befestigt sein. Beispielsweise können der erste und zweite Halteflansch miteinander verschraubt sein. Hierzu kann der erste Halteflansch (ggf. zusätzlich zu dem Halteflanschlochkreis) bspw. einen ersten Lochkreis mit mehreren ersten Löchern umfassen und der zweiten Halteflansch einen zweiten Lochkreis mit mehreren zweiten Löchern umfassen, wobei durch die ersten und zweiten Löcher jeweils paarweise Schraubelemente geführt sind. Alternativ können der erste und zweite Halteflansch auch integral-einstückig miteinander verbunden sein, bspw. indem diese mittels 3D-Druck gefertigt sind. Bevorzugt sind der erste und zweite Halteflansch dabei zumindest abschnittsweise, insbesondere im Bereich der jeweiligen Durchgangsöffnungen voneinander beabstandet, vorzugsweise derart, dass ein evakuierbarer Zwischenraum zwischen dem ersten und zweiten Halteflansch gebildet ist. Wie im Folgenden noch eingehender beschrieben werden wird, kann durch die dadurch auf vorteilhafte Weise eine möglichst druckdichte und biegefreie Durchführung der Lichtwellenleiter ermöglicht werden.

Nach einem weiteren Aspekt können Durchgangsöffnungen des ersten Halteflanschs der Vielzahl von Durchgangsöffnungen (welche zur besseren Unterscheidung auch als erste Durchgangsöffnungen bezeichnet werden können) und Durchgangsöffnungen des zweiten Halteflanschs (welche als zweite Durchgangsöffnungen bezeichnet werden können) zueinander ausgerichtet sein. Beispielsweise können die (ersten) Durchgangsöffnungen des ersten Halteflanschs und die (zweiten) Durchgangsöffnungen des zweiten Halteflanschs paarweise zueinander fluchtend ausgerichtet sein. Durch die doppelte bzw. beabstandete Durchführung/Abstützung der jeweiligen Lichtwellenleiter können auf vorteilhafte Weise mechanische Belastungen (bspw. durch Biegungen der Lichtwellenleiter) möglichst vermieden werden.

Gemäß einem weiteren Aspekt kann zwischen dem ersten Halteflansch und dem zweiten Halteflansch ein (z. B. mittels einer Vakuumpumpe, insbesondere Drehschieberpumpe) evakuierbarer Zwischenraum vorgesehen sein. Beispielweise können der erste und zweite Halteflansch den evakuierbaren Zwischenraum (zumindest abschnittsweise) begrenzen. Bevorzugt ist der evakuierbare Zwischenraum dabei zumindest auf ein Vor- oder Feinvakuum evakuierbar. Auf vorteilhafte Weise kann dadurch die Leckrate an den jeweiligen Durchgangsöffnungen reduziert und somit insgesamt die Dichtheit der Lichtwellenleiter-Durchführung erhöht werden.

Nach einem weiteren Aspekt kann die Lichtwellenleiter-Durchführung eine Stützeinrichtung (z. B. eine Stützplatte) umfassen. Die (z. B. aus Polyetheretherketon gefertigte) Stützeinrichtung kann dabei auf Seiten der Vakuumkammer, vorzugsweise beabstandet von dem ersten Halteflansch und/oder beabstandet von der Druckplatte des ersten Halteflanschs, angeordnet sein. Bevorzugt weist die Stützeinrichtung somit einen größeren Abstand zum zweiten Halteflansch als zum ersten Halteflansch auf. Lediglich beispielhaft kann die Stützeinrichtung über einen Abstandshalter (z. B. in Form eines Rohrabschnitts) an dem ersten Halteflansch und/oder an der Druckplatte des ersten Halteflanschs befestigt sein. Weiterhin kann die Stützeinrichtung eine Vielzahl von Halteöffnungen aufweisen, die bevorzugt mit den (ersten) Durchgangsöffnungen des ersten Halteflanschs und den (zweiten) Durchgangsöffnungen des zweiten Halteflanschs ausgerichtet sind. Beispielweise können die Halteöffnungen jeweils fluchtend zu den (ersten) Durchgangsöffnungen des ersten Halteflanschs ausgerichtet sein, welche wiederum fluchtend zu den (zweiten) Durchgangsöffnungen des zweiten Halteflanschs sein können. Mit anderen Worten können die Lichtwellenleiterjeweils (z. B. geradlinig) durch eine der Halteöffnungen, eine der (ersten) Durchgangsöffnungen des ersten Halteflanschs und eine der (zweiten) Durchgangsöffnungen des zweiten Halteflanschs geführt bzw. führbar sein. Durch das Vorsehen der Stützeinrichtung und damit insgesamt eine dreifache Abstützung der Lichtwellenleiter können auf vorteilhafte Weise Bewegungen der Lichtwellenleiter bzw. mechanische Belastungen der Lichtwellenleiter (bspw. durch Biegungen) möglichst vermieden werden.

Gemäß einem weiteren Aspekt kann die Lichtwellenleiter-Durchführung eine Kupplungseinrichtung (z. B. eine FC-Stecker-Kupplungseinrichtung) aufweisen. Die Kupplungseinrichtung kann auf Seiten der Umgebung der Vakuumkammer, vorzugsweise beabstandet von dem zweiten Halteflansch und/oder beabstandet von der Druckplatte des zweiten Halteflanschs, angeordnet sein. Bevorzugt weist die Kupplungseinrichtung somit einen größeren Abstand zum ersten Halteflansch als zum zweiten Halteflansch auf. Lediglich beispielhaft kann die Kupplungseinrichtung über eine Verlängerung (z. B. in Form eines Hohlprofils und/oder Gehäuseabschnitts) an dem zweiten Halteflansch und/oder an der Druckplatte des zweiten Halteflanschs befestigt sein. Weiterhin kann die Kupplungseinrichtung eine Vielzahl von Wellenleiterkupplungen (z. B. in Form entsprechender Buchsen und/oder Kupplungen) zum Anschluss externer Lichtwellenleiter (z. B. zum Anschluss externer Lichtwellenleiterstecker) aufweisen. Lediglich beispielhaft können Wellenleiterkupplungen jeweils als FC-Buchsen oder FC-Kupplungen ausgebildet sein. Bevorzugt sind die Wellenleiterkupplungen der Vielzahl von Wellenleiterkupplungen mit den (ersten) Durchgangsöffnungen des ersten Halteflanschs und den (zweiten) Durchgangsöffnungen des zweiten Halteflanschs ausgerichtet. Beispielweise können die Wellenleiterkupplungen jeweils fluchtend zu den (ersten) Durchgangsöffnungen des ersten Halteflanschs ausgerichtet sein, welche wiederum fluchtend zu den (zweiten) Durchgangsöffnungen des zweiten Halteflanschs sein können. Auf vorteilhafte Weise kann dadurch ein möglichst einfaches Anschließen externer Lichtwellenleiterstecker an die Lichtwellenleiter-Durchführung erreicht werden.

Nach einem weiteren Aspekt kann jede Druckeinrichtung eine Druckplatte (z. B. eine Stahlplatte) aufweisen. Diese kann dabei an dem jeweiligen Halteflansch befestigt (z. B. angeschraubt) sein. Im Fall, dass der mindestens eine Halteflansch einen ersten und zweiten Halteflansch umfasst, kann die Lichtwellenleiter-Durchführung bspw. eine erste Druckeinrichtung mit einer ersten Druckplatte, die an dem ersten Halteflansch befestigt (z. B. angeschraubt) ist, und eine zweite Druckeinrichtung mit einer zweiten Druckplatte, die an dem zweiten Halteflansch befestigt (z. B. angeschraubt) ist, aufweisen. Die Druckplatte bzw. die erste und zweite Druckplatte können jeweils eine Vielzahl von Durchgangslöchern aufweisen, durch die die Lichtwellenleiter durchführbar oder durchgeführt sind.

Zudem oder alternativ kann jede Druckeinrichtung jeweils eine Vielzahl von Zwischenhülsen aufweisen. Bevorzugt dient die Vielzahl von Zwischenhülsen dabei zur Übertragung von Druckkraft von der (jeweiligen) Druckplatte auf das jeweilige Dichtungselement. Jede der Zwischenhülsen kann dazu in einer der Durchgangsöffnungen des jeweiligen Halteflanschs aufgenommen und/oder angeordnet sein. Im Fall, dass der mindestens eine Halteflansch einen ersten und zweiten Halteflansch umfasst, kann bspw. die erste Druckeinrichtung eine erste Vielzahl von Zwischenhülsen aufweisen, die in den jeweiligen Durchgangsöffnungen des ersten Halteflanschs aufgenommen sind und eine zweite Vielzahl von Zwischenhülsen aufweisen, die in den jeweiligen Durchgangsöffnungen des zweiten Halteflanschs aufgenommen sind. Auf vorteilhafte Weise kann dadurch insgesamt eine sichere Fixierung der Lichtwellenleiter sichergestellt werden.

Gemäß einem weiteren Aspekt kann in den Durchgangsöffnungen (z. B. in deren jeweiligen Dichtungsaufnahmen) jeweils ein weiteres Dichtungselement und/oder eine weitere Zwischenhülse angeordnet sein. Zusätzlich zu dem in diesem Zusammenhang auch als erstes Dichtungselement bezeichenbaren Dichtungselement kann in den (jeweiligen) Dichtungsaufnahmen der Durchgangsöffnungen somit jeweils auch ein weiteres, auch als zweites Dichtungselement bezeichenbares, Dichtungselement aufgenommen bzw. angeordnet sein. Lediglich beispielhaft können die weiteren bzw. zweiten Dichtungselemente jeweils als Dichtungsringe (z. B. Dichtungs-O-Ringe) ausgebildet sein. Es ist allerdings auch möglich, dass die weiteren bzw. zweiten Dichtungselemente jeweils zwei (z. B. metallische) Endabschnitte und eine (z. B. verformbare), zwischen den zwei Endabschnitten angeordnete, Dichtungsmanschette aufweisen, wie im Folgenden noch eingehender beschrieben werden wird.

Zudem oder alternativ kann zusätzlich zu der Zwischenhülse in den Dichtungsaufnahmen der Durchgangsöffnungen jeweils auch eine weitere Zwischenhülse aufgenommen bzw. angeordnet sein. Die jeweiligen weiteren Zwischenhülsen können dabei Teil der (jeweiligen) Druckeinrichtung sein. Durch das Vorsehen entsprechender doppelter Dichtungen kann auf vorteilhafte Weise die Leckrate an den jeweiligen Durchgangsöffnungen reduziert und damit insgesamt die Dichtheit der Lichtwellenleiter-Durchführung erhöht werden.

Nach einem weiteren Aspekt kann jede der Zwischenhülsen eine Fase aufweisen, vorzugsweise an einer zu dem jeweiligen Dichtungselement weisenden Seite der jeweiligen Zwischenhülse. Beispielsweise kann jede der Zwischenhülsen eine (z. B. in einem Winkel von 45°) gefaste bzw. abgeschrägte Kante aufweisen. Bevorzugt dient die jeweilige Fase dazu, eine (jeweilige) Kontaktfläche zwischen den Zwischenhülsen und den (jeweils an diesen anliegenden) Dichtungselementen zu vergrößern. Auf vorteilhafte Weise kann dadurch die Dichtigkeit der Lichtwellenleiter-Durchführung verbessert werden.

Zudem oder alternativ kann auch jede der weiteren Zwischenhülsen eine Fase aufweisen, welche zur besseren Unterscheidung als weitere Fase bezeichnet werden kann. Bevorzugt weist jede der weiteren Zwischenhülsen die weitere Fase dabei an einer zu dem jeweiligen weiteren Dichtungselement weisenden weiteren Seite der jeweiligen weiteren Zwischenhülse auf. Entsprechend kann auch jede der weiteren Zwischenhülsen bspw. eine (z. B. in einem Winkel von 45°) gefaste bzw. abgeschrägte (weitere) Kante aufweisen.

Gemäß einem weiteren Aspekt können die jeweiligen Dichtungselemente mindestens eines von einem Elastomer und einem Metall umfassen. Beispielsweise können die jeweiligen Dichtungselemente jeweils aus einem Elastomer (z. B. Viton) und/oder Metall (z. B. Indium und/oder Kupfer und/oder Edelstahl) gefertigt sein.

Nach einem weiteren Aspekt können die jeweiligen Dichtungselemente jeweils einen Dichtungsring aufweisen und/oder als Dichtungsring ausgebildet sein. Beispielsweise können die Dichtungselemente und/oder die Dichtungsringe jeweils als Dichtungs-O-Ringe und/oder Dichtungs-C-Ringe ausgeführt sein. Die Dichtungselemente bzw. Dichtungsringe können somit eine (z. B. umfangsseitig) geschlossene und/oder ringförmige (z. B. kreisringförmige) Form aufweisen. Auf vorteilhafte Weise können dadurch einfach und günstig herzustellende Dichtungselemente bereitgestellt werden.

Gemäß einem weiteren Aspekt können die jeweiligen Dichtungselemente jeweils zwei (z. B. metallische) Endabschnitte und eine (z. B. verformbare) Dichtungsmanschette (z. B. aus Polytetrafluorethylen) aufweisen. Die Dichtungsmanschette ist hierbei bevorzugt zwischen den zwei Endabschnitten angeordnet, vorzugsweise derart, dass die Dichtungsmanschette (z. B. durch eine axiale Druckbeaufschlagung eines der Endabschnitte) zwischen den zwei Endabschnitten komprimierbar (z. B. stauchbar) ist. Weiterhin bevorzugt weist die Dichtungsmanschette eine (z. B. umfangsseitig) geschlossene (z. B. hülsenförmige und/oder hohlzylinderförmige) Form auf. Auf vorteilhafte Weise kann durch diese (z. B. mehrteiligen) Dichtungselemente eine lösbare und wiederverwendbare Lösung zur Abdichtung der Lichtwellenleiter bereitgestellt werden.

In einer Ausführungsform kann die Dichtungsmanschette aus Polytetrafluorethylen sein.

Zudem oder alternativ kann die Dichtungsmanschette mittels 3D-Drucktechnik hergestellt sein. Beispielsweise kann die Dichtungsmanschette durch additive Fertigung, z. B. durch lagenweises Auftragen eines Werkstoffs gefertigt sein.

Zudem oder alternativ kann die Dichtungsmanschette einen im Wesentlichen X-förmigen Querschnitt (z. B. Profilquerschnitt) aufweisen. Beispielsweise kann die Dichtungsmanschette senkrecht zu einer Umfangsrichtung der Dichtungsmanschette ein im Wesentlichen X-förmiges Profil aufweisen. Auf vorteilhafte Weise ermöglicht diese Form ein radiales Expandieren der Dichtungsmanschette bei einer axialen Druckbeaufschlagung, um dadurch auf die jeweiligen Lichtwellenleiter jeweils eine radial nach innen gerichtete Druck- und/oder Klemmkraft auszuüben.

Zudem oder alternativ können die Endabschnitte jeweils ringförmig ausgebildet sein und/oder eine geschlossene Form aufweisen. Beispielsweise können die (jeweiligen) Endabschnitte jeweils als Ring-Endabschnitte ausgebildet sein.

Zudem oder alternativ können die Endabschnitte und/oder Ring-Endabschnitte jeweils zumindest abschnittsweise keilförmig ausgebildet sein. Beispielsweise können die Endabschnitte und/oder Ring-Endabschnitte, vorzugsweise an jeweils einer der Dichtungsmanschette zugewandten Seite, einen spitz zulaufenden Abschnitt aufweisen. Beispielsweise können sich die Endabschnitte und/oder Ring-Endabschnitte jeweils konisch verjüngen. Weiterhin können die Endabschnitte und/oder Ring-Endabschnitte, vorzugsweise deren spitz zulaufenden bzw. keilförmigen Abschnitte, in die Dichtungsmanschette eingreifen und/oder zumindest abschnittsweise in der Dichtungsmanschette angeordnet sein, bevorzugt um bei einer axialen Druckbeaufschlagung eines der Endabschnitte die Dichtungsmanschette (z. B. radial) auseinanderzuspreizen.

Unabhängig von der konkreten Ausgestaltung der Dichtungselemente können diese jeweils ausgebildet sein, sich bei einer (z. B. axialen) Belastung (z. B. Druckbeaufschlagung) entlang den jeweiligen Durchgangsöffnungen quer (z. B. radial) dazu aufzuweiten und/oder auszudehnen. Als axial kann hierbei bspw. eine Richtung verstanden werden, welche entlang einer längsten Ausdehnung bzw. Erstreckungsrichtung der jeweiligen Durchgangsöffnungen verläuft. Entsprechend können die jeweiligen Dichtungselemente (z. B. axial) komprimierbar und/oder stauchbar sein.

Weiterhin betrifft die Offenbarung eine Lichtwellenleiter-Anordnung. Bevorzugt ist die Lichtwellenleiter-Anordnung dabei zur, vorzugsweise druckdichten, Befestigung an einer Vakuumkammer (z. B. Ultrahochvakuumkammer) eingerichtet.

Die Lichtwellenleiter-Anordnung umfasst eine Lichtwellenleiter-Durchführung, wie in diesem Dokument beschrieben. Folglich sollen die vorstehen im Zusammenhang mit der Lichtwellenleiter-Durchführung beschriebenen Merkmale auch im Zusammenhang mit der Lichtwellenleiter-Anordnung offenbart und beanspruchbar sein. Entsprechendes soll auch umgekehrt gelten.

Ferner umfasst die Lichtwellenleiter-Anordnung eine Vielzahl von Lichtwellenleitern. Diese sind bevorzugt jeweils in einer der Durchgangsöffnungen angeordnet und/oder aufgenommen. Beispielsweise kann jeder der Lichtwellenleiter, vorzugsweise geradlinig, durch eine der ersten Durchgangsöffnungen des ersten Halteflansches und eine der zweiten Durchgangsöffnungen des zweiten Halteflansches geführt sein. Bevorzugt ist somit jeder der Durchgangsöffnungen jeweils ein, vorzugsweise genau ein, Lichtwellenleiter der Vielzahl von Lichtwellenleitern zugeordnet. Entsprechend kann die Zahl der Lichtwellenleiter gleich der Zahl der Durchgangsöffnungen sein. Wie im Folgenden noch eingehender beschrieben werden wird, kann die Zahl der Lichtwellenleiter allerdings auch unterschiedlich von der Zahl der Durchgangsöffnungen sein.

Gemäß einem Aspekt können die Lichtwellenleiter der Vielzahl von Lichtwellenleitern im Bereich der Lichtwellenleiter-Durchführung jeweils einen Metallmantel aufweisen. Beispielsweise können die jeweiligen Lichtwellenleitern im Bereich der Lichtwellenleiter-Durchführung jeweils zumindest abschnittsweise mit Metall (z. B. Edelstahl) ummantelt sein. Die jeweiligen Metallmäntel können hierbei bspw. in Form einer Metallhülse (z. B. in Form eines Edelstahlrohrs) ausgebildet sein, welche z. B. mit dem jeweiligen Lichtwellenleiter (z. B. mittels Epoxidharz) verklebt sein können. Alternativ können die jeweiligen Metallmäntel auch mit dem jeweiligen Lichtwellenleiter verlötet sein, wozu auf diese (z. B. abschnittsweises, insbesondere in einem Bereich, in dem die Metallhülse angebracht werden soll) jeweils eine Metallbeschichtung auf den jeweiligen Lichtwellenleiter aufgebracht ist. Im Fall, dass der mindestens eine Halteflansch einen ersten und zweiten Halteflansch umfasst, können die Lichtwellenleiter Vielzahl von Lichtwellenleitern jeweils zwei, vorzugsweise voneinander beabstandete, Metallmantelabschnitte aufweisen. Diese können dabei z. B. jeweils im Bereich des ersten Halteflanschs und des zweiten Halteflanschs an den jeweiligen Lichtwellenleitern angeordnet sein. Insgesamt kann durch die vorgenannten Metallmäntel auf vorteilhafte Weise eine gute Abdichtung zu den jeweiligen Dichtungselementen erreicht werden. Ferner können dadurch Druckbelastungen auf die eigentliche Lichtwellenleiter und damit Transmissionsverluste reduziert werden.

In einer Ausführungsform können die jeweiligen Metallmäntel und/oder die jeweiligen Metallmantelabschnitte jeweils angefast sein, vorzugweise um ein Einziehen der Lichtwellenleiter in die Lichtwellenleiter-Durchführung (z. B. unter Zuhilfenahme von etwas Vakuumfett) zu vereinfachen. Beispielsweise können die jeweiligen Metallmäntel und/oder die jeweiligen Metallmantelabschnitte jeweils eine 60°-Fase aufweisen.

Nach einem weiteren Aspekt können in einer Durchgangsöffnungsteilmenge der Vielzahl von Durchgangsöffnungen keine Lichtwellenleiter angeordnet sein. Beispielsweise kann die Zahl der Lichtwellenleiter geringer als die Zahl der Durchgangsöffnungen bzw. geringer als die Zahl der ersten oder zweiten Durchgangsöffnungen sein. In der Durchgangsöffnungsteilmenge bzw. den Durchgangsöffnungen der Durchgangsöffnungsteilmenge können (anstelle der eigentlichen Lichtwellenleiter), vorzugsweise druckdichte, Blindstopfen angeordnet sein. Entsprechend kann die Lichtwellenleiter-Anordnung ferner einen oder mehrere derartige Blindstopfen umfassen. Die Blindstopfen können in ihrer Form und/oder Größe an die eigentlich aufzunehmenden Lichtwellenleiter angepasst sein und/oder abgesehen von dem verwendeten Material identisch zu der eigentlich aufzunehmenden Lichtwellenleiter ausgebildet sein.

Weiterhin betrifft die Offenbarung ein Verfahren. Bevorzugt dient das Verfahren einer Durchführung einer Vielzahl von Lichtwellenleitern zwischen einem Inneren einer evakuierbaren Vakuumkammer und einer (z. B. äußeren) Umgebung der Vakuumkammer. Hierbei wird die Lichtwellenleiter-Durchführung, wie in diesem Dokument beschrieben, verwendet.

Das Verfahren umfasst ein Positionieren der Lichtwellenleiter der Vielzahl von Lichtwellenleitern (und/oder von Blindstopfen) in den Durchgangsöffnungen des mindestens einen Halteflanschs. Beispielsweise kann dies durch ein händisches Einführen der Lichtwellenleiter (und/oder Blindstopfen) in die jeweiligen Durchgangsöffnungen erfolgen.

Ferner umfasst das Verfahren ein Komprimieren der Dichtungselemente in den Dichtungsaufnahmen der Durchgangsöffnungen (z. B. axial) entlang der jeweiligen Durchgangsöffnung. Vorzugsweise erfolgt dies mittels der Druckeinrichtung. Beispielsweise kann das axiale Komprimieren durch ein (z. B. planparalleles) Festschrauben der Druckplatte an dem jeweiligen Halteflansch eine axiale Klemmkraft erzeugt werden, welche mittels der in den Durchgangsöffnungen aufgenommenen Zwischenhülsen an die Dichtungselemente übertragen werden kann.

Bevorzugt umfasst das Verfahren ferner ein Evakuieren der Vakuumkammer, bspw. mittels einer entsprechenden Vakuumpumpe (z. B. Turbomolekularpumpe).

Die zuvor beschriebenen Ausführungsformen und Merkmale sind miteinander kombinierbar. Weitere Einzelheiten und Vorteile werden im Folgenden unter Bezug auf die beigefügten Zeichnungen beschrieben. Es zeigen:
- Figur 1: eine schematische Darstellung einer Lichtwellenleiter-Durchführung gemäß einer Ausführungsform in einem an eine Vakuumkammer montierten Zustand;
- Figur 2: eine Vorderansicht der Lichtwellenleiter-Durchführung von Figur 1;
- Figur 3: eine Schnittdarstellung der Lichtwellenleiter-Durchführung entlang der in Figur 2 markierten Schnittlinie A-A;
- Figur 4: eine Detaildarstellung des in Figur 3 markierten Bereichs C der Lichtwellenleiter-Durchführung;
- Figur 5: eine Schnittdarstellung der Lichtwellenleiter-Durchführung entlang der in Figur 2 markierten Schnittlinie B-B;
- Figur 6: eine Detaildarstellung einer Dichtungsaufnahme einer Lichtwellenleiter-Durchführung gemäß einer Ausführungsform;
- Figur 7: eine Detaildarstellung eines Dichtungselements gemäß einer Ausführungsform;
- Figur 8: eine Schnittdarstellung des Dichtungselements entlang der in Figur 7 markierten Schnittlinie A-A;
- Figur 9: eine schematische Darstellung einer Lichtwellenleiter-Durchführung gemäß einer weiteren Ausführungsform;
- Figur 10: eine Schnittdarstellung der Lichtwellenleiter-Durchführung von Figur 9;
- Figur 11: eine Seitenansicht der Lichtwellenleiter-Durchführung von Figur 9;
- Figur 12: eine Detaildarstellung eines Halteflanschs gemäß einer Ausführungsform;
- Figur 13: eine teiltransparente Seitenansicht des Halteflanschs von Figur 12;
- Figur 14: eine Schnittdarstellung des Halteflanschs entlang der in Figur 13 markierten Schnittlinie C-C;
- Figur 15: eine Schnittdarstellung des Halteflanschs entlang der in Figur 13 markierten Schnittlinie B-B;
- Figur 16: eine Schnittdarstellung des Halteflanschs entlang der in Figur 13 markierten Schnittlinie A-A;
- Figur 17: eine Schnittdarstellung eines Halteflanschs gemäß einer weiteren Ausführungsform;
- Figur 18: eine weitere Schnittdarstellung des Halteflanschs von Figur 17;
- Figur 19: eine isometrische Darstellung des Halteflanschs von Figur 17;
- Figur 20: eine Darstellung einer Lichtwellenleiter-Durchführung gemäß einer nochmals weiteren Ausführungsform; und
- Figur 21: eine Seitenansicht der Lichtwellenleiter-Durchführung von Figur 20.

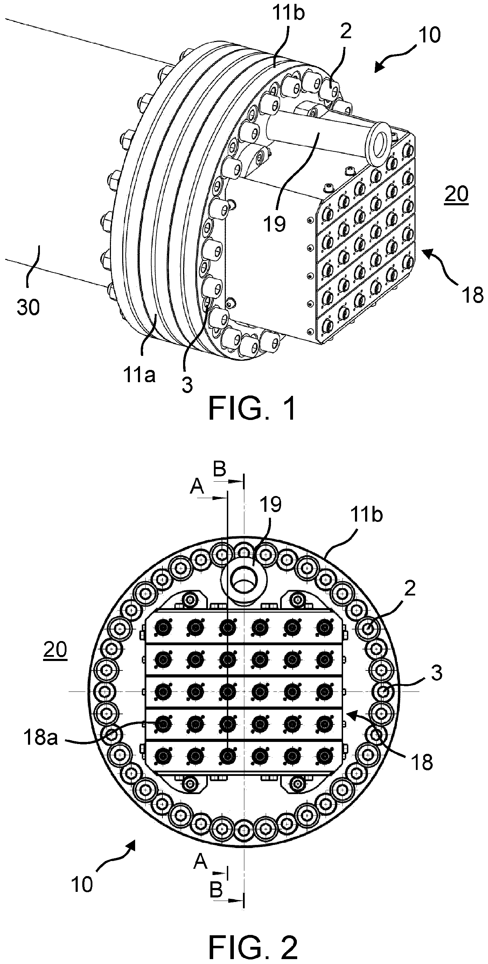

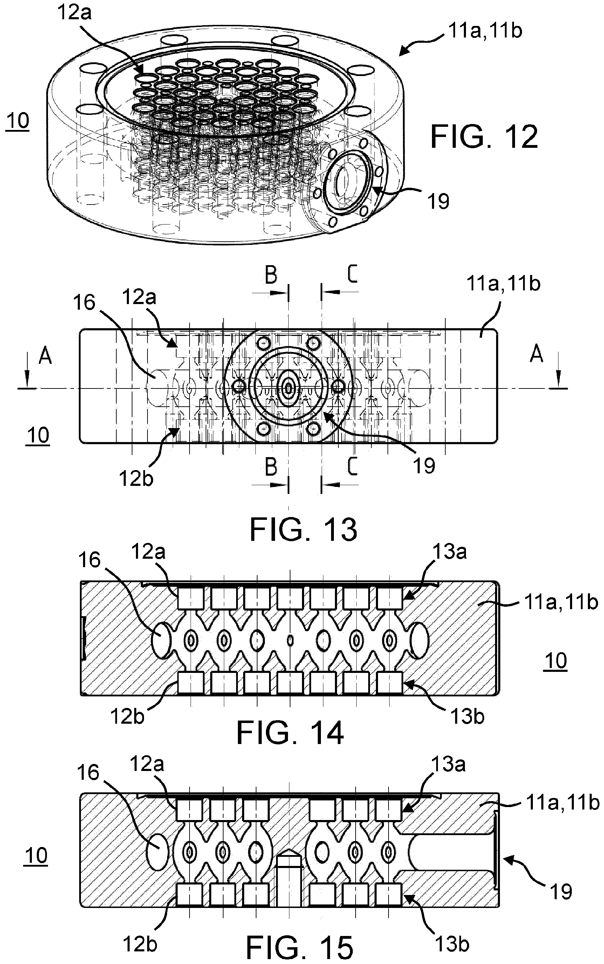

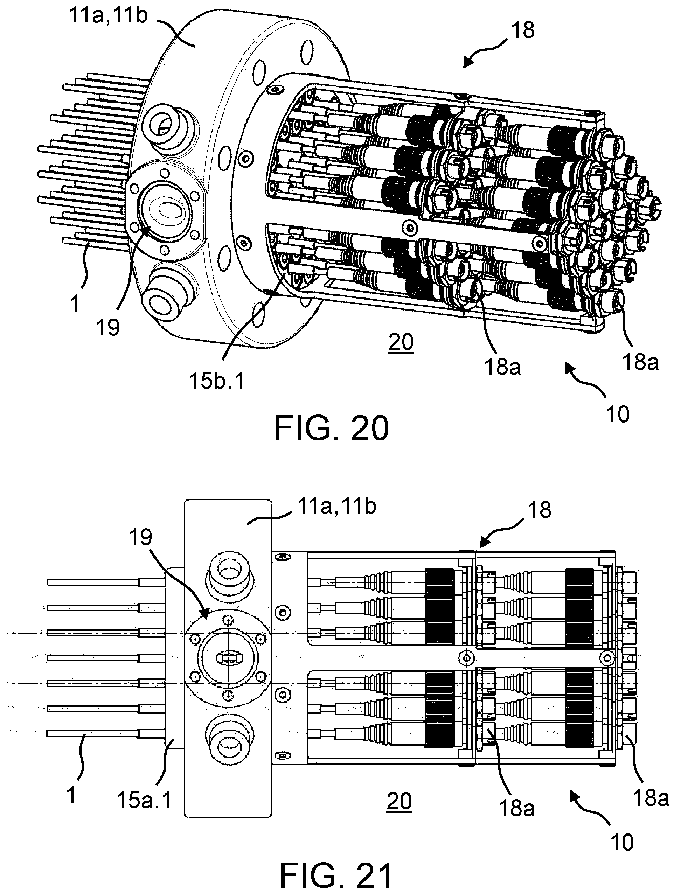

Die in den Figuren 1 bis 21 gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren 1 bis 21 zeigen jeweils zumindest ausschnittsweise eine Lichtwellenleiter-Durchführung 10 für eine Vakuumkammer 30. Die Lichtwellenleiter-Durchführung 10 kann somit, wie beispielhaft in Figur 1 darstellt ist, an eine Vakuumkammer 30 montierbar sein, bspw. durch Anflanschen an einen (genormten) Vakuumflansch (z. B. CF-Flansch) der Vakuumkammer 30.

Die Lichtwellenleiter-Durchführung 10 ist bevorzugt zur Durchführung einer Vielzahl von Lichtwellenleitern 1 zwischen einem Inneren einer evakuierbaren Vakuumkammer 30 und einer (z. B. äu-ßeren) Umgebung der Vakuumkammer 30 eingerichtet. Die Lichtwellenleiter-Durchführung 10 kann ferner dazu ausgebildet sein, (mittel der entsprechenden Lichtwellenleiter 1) Licht bzw. optische Signale durch eine druckdichte Wandung bzw. Begrenzung der Vakuumkammer 30 zu führen.

Die Lichtwellenleiter-Durchführung 10 weist mindestens einen Halteflansch 11a, 11b, aufweisend eine Vielzahl von Durchgangsöffnungen 12a, 12b, die jeweils mit einer Dichtungsaufnahme 13a, 13b und mindestens einem Dichtungselement 14a, 14b versehen sind, sowie mindestens eine Druckeinrichtung 15a, 15b auf.

Der mindestens eine (z. B. aus VA gefertigte) Halteflansch 11a, 11b kann dabei zur, vorzugsweise druckdichten, Befestigung an der Vakuumkammer 30 eingerichtet sein. Beispielsweise kann der mindestens eine Halteflansch 11a, 11b als ein CF-Flansch gemäß ISO 3669:2017 ausgeführt sein. Der mindestens eine Halteflansch 11a, 11b kann eine Dichtfläche aufweisen (nicht ausdrücklich dargestellt), die korrespondierend zu einer Dichtfläche des Vakuumflanschs der Vakuumkammer 30 ausgebildet sein kann. Die Dichtflächen des mindestens einen Halteflanschs 11a, 11b kann bspw. zur Aufnahme eine Dichtung (z. B. in Form eines O-Rings) ausgebildet sein und/oder eine Schneidkante (nicht dargestellt) umfassen. Beispielsweise kann der mindestens eine Halteflansch 11a, 11b bzw. dessen Dichtfläche zur Aufnahme eines Metalldichtrings (z. B. Kupferdichtrings) ausgebildet sein, in den sich bei einer Montage des mindestens eine Halteflanschs 11a, 11b an der Vakuumkammer 30 die Schneidkante des mindestens einen Halteflanschs 11a, 11b einpresst.

Weiterhin kann der mindestens eine Halteflansch 11a, 11b zur Befestigung an der Vakuumkammer 30 einen Halteflanschlochkreis zur Aufnahme von Befestigungselementen 2 (z. B. Gewindebolzen) aufweisen (vgl. z. B. Figuren 1-3). Der Halteflanschlochkreis kann hierbei korrespondierend zu einem Vakuumflanschlochkreis des Vakuumflanschs der Vakuumkammer 30 ausgebildet sein. Entsprechend kann eine Anzahl und Anordnung von Löchern des Halteflanschlochkreises des mindestens einen Halteflansch 11a, 11b einer Anzahl und Anordnung von Löchern des Vakuumflanschlochkreises des Vakuumflanschs der Vakuumkammer 30 entsprechen. Durch Hindurchführen von Befestigungselementen 2 durch jeweils ein Loch des Halteflanschlochkreises des mindestens einen Halteflanschs 11a, 11b und ein Loch des Vakuumflanschlochkreises des Vakuumflanschs der Vakuumkammer 30 und anschließendes Anziehen bzw. Sichern der Befestigungselemente 2 (z. B. mittels Schraubmuttern) kann die Lichtwellenleiter-Durchführung 10 an der Vakuumkammer 30 fixiert werden.

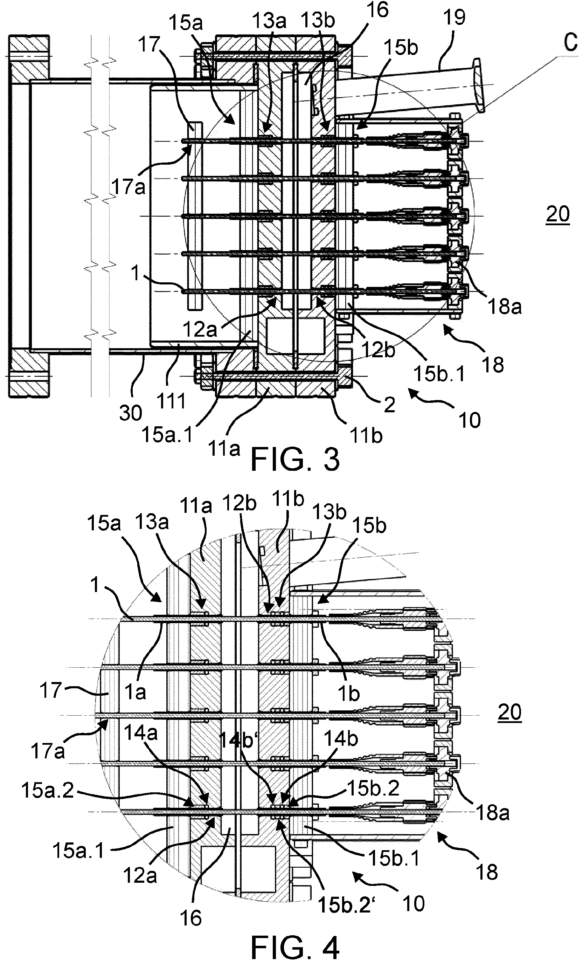

Wie vorstehend erwähnt, weist der mindestens eine Halteflansch 11a, 11b eine Vielzahl von Durchgangsöffnungen 12a, 12b (z. B. in Form von Durchgangsbohrungen) auf, die vorzugsweise zur Aufnahme der Lichtwellenleiter 1 dienen (vgl. z. B. Figuren 3, 4 und 5). Entsprechend können die Durchgangsöffnungen 12a, 12b bzw. deren jeweiliger Öffnungsquerschnitt jeweils an eine Form, Größe und/oder Kontur der aufzunehmenden bzw. aufgenommenen Lichtwellenleiter 1 angepasst sein. Die Anzahl der Durchgangsöffnungen 12a, 12b kann dabei je nach Flanschgröße variieren. Beispielsweise kann die Lichtwellenleiter-Durchführung 10 im Fall, dass der mindestens eine Halteflansch 11a, 11b als ein CF160-Halteflansch ausgebildet ist, zumindest dreißig, vorzugsweise zumindest sechzig, Durchgangsöffnungen 12a, 12b bzw. Lichtwellenleiter-Durchführungen für 1500µm Lichtwellenleiter aufweisen. Im Fall, dass der mindestens eine Halteflansch 11a, 11b als ein CF63-Halteflansch ausgebildet ist, kann die Lichtwellenleiter-Durchführung 10 bspw. zumindest fünfunddreißig Durchgangsöffnungen 12a, 12b bzw. Lichtwellenleiter-Durchführungen für 470µm Lichtwellenleiter aufweisen.

Die Durchgangsöffnungen 12a, 12b können den mindestens eine Halteflansch 11a, 11b (vollständig) durchdringen. Entsprechend können die Durchgangsöffnungen 12a, 12b das Innere der Vakuumkammer 30 und die (z. B. äußere) Umgebung der Vakuumkammer 30 miteinander verbinden. Bevorzugt sind die Durchgangsöffnungen 12a, 12b jeweils zur (z. B. druckdichten) Aufnahme von jeweils einem Lichtwellenleiter 1 der Vielzahl von Lichtwellenleitern 1 eingerichtet. In die jeweiligen Durchgangsöffnungen 12a, 12b kann somit jeweils einer der Lichtwellenleiter 1 aufnehmbar und/oder anordbar sein. Mittels der Durchgangsöffnungen 12a, 12b können die Lichtwellenleiter 1 durch den mindestens eine Halteflansch 11a, 11b durchführbar sein. Die Lichtwellenleiter-Durchführung 10 samt den entsprechenden Lichtwellenleitern 1 kann hierbei eine Lichtwellenleiter-Anordnung 20 bilden.

Jede der Durchgangsöffnungen 12a, 12b weist eine Dichtungsaufnahme 13a, 13b und ein Dichtungselement 14a, 14b auf (siehe z. B. Figur 4). Entsprechend kann die Lichtwellenleiter-Durchführung 10 eine Vielzahl von Dichtungsaufnahmen 13a, 13b und eine Vielzahl von Dichtungselementen 14a, 14b umfassen. Bevorzugt ist jedes der Dichtungselemente 14a, 14b dabei in jeweils einer der Dichtungsaufnahmen 13a, 13b angeordnet, vorzugsweise zur druckdichten Aufnahme des durch die jeweiligen Durchgangsöffnungen 12a, 12b geführten Lichtwellenleiters 1. Beispielsweise können die jeweiligen Dichtungsaufnahmen 13a, 13b als ein Abschnitt der jeweiligen Durchgangsöffnungen 12a, 12b ausgebildet sein. Bevorzugt weisen die Dichtungsaufnahmen 13a, 13b bzw. die entsprechenden Abschnitte dabei einen im Vergleich zur restlichen Durchgangsöffnung 12a, 12b verbreiterten (Öffnung-)Querschnitt auf.

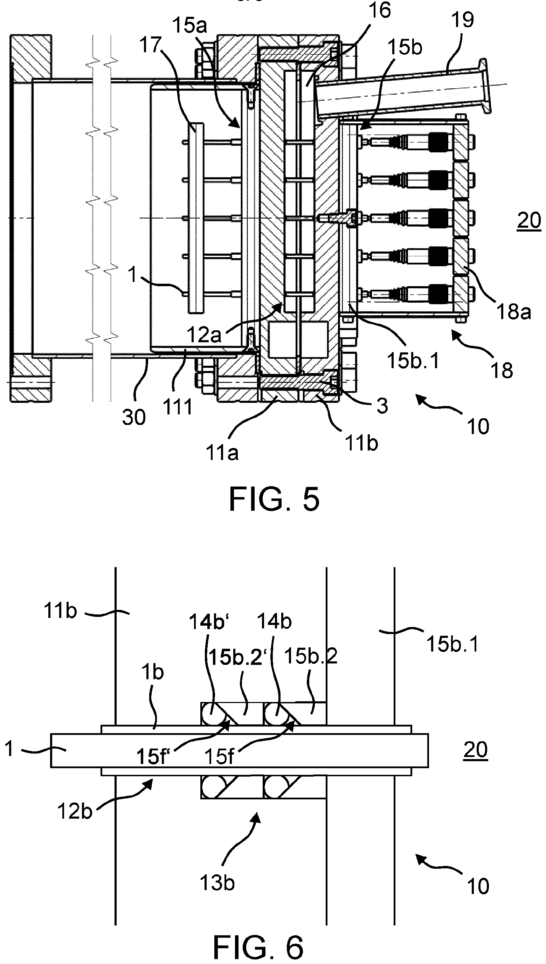

Die Dichtungselemente 14a, 14b können bspw. als Dichtungsringe ausgebildet sein und/oder jeweils einen Dichtungsring umfassen (vgl. z. B. Figuren 4 und 6). Die Dichtungselemente 14a, 14b bzw. Dichtungsringe können hierbei aus einem Elastomer (wie z. B. Viton) und/oder aus einer Metalllegierung gefertigt sein. Die Dichtungselemente 14a, 14b können eine umfangsseitig geschlossene und/oder ringförmige (z. B. kreisringförmige) Form aufweisen. Die Dichtungselemente 14a, 14b können einen massiven Querschnitt aufweisen bzw. aus einem Vollmaterial hergestellt sein. Beispielsweise können die Dichtungselemente 14a, 14b als O-Ringe ausgebildet sein. Es ist allerdings auch möglich, dass die Dichtungselemente 14a, 14b einen offenen Querschnitt aufweisen. Beispielsweise können die Dichtungselemente 14a, 14b auch als C-Ringe ausgebildet sein.

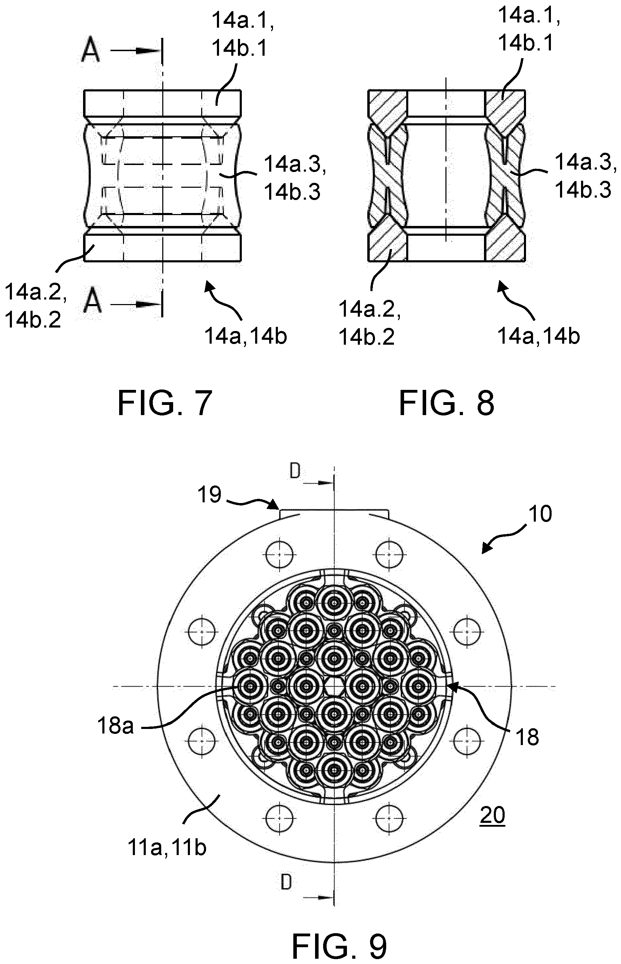

Zudem oder alternativ können die Dichtungselemente 14a, 14b auch mehrteilig ausgebildet sein. Beispielsweise können die Dichtungselemente 14a, 14b zwei (z. B. metallische) Endabschnitte 14a.1, 14a.2, 14b.1, 14b.2 und eine (z. B. flexible) Dichtungsmanschette 14a.3, 14b.3 aufweisen (vgl. Figuren 7 und 8). Die Endabschnitte 14a.1, 14a.2, 14b.1, 14b.2 können jeweils ringförmig ausgebildet sein und/oder eine geschlossene Form aufweisen. Teile der Endabschnitte 14a.1, 14a.2, 14b.1, 14b.2 können keilförmig und/oder spitz zulaufend ausgebildet sein. Bevorzugt ragen die keilförmigen und/oder spitz zulaufenden Teile von den Endabschnitte 14a.1, 14a.2, 14b.1, 14b.2 ab. Beispielsweise können die Endabschnitte 14a.1, 14a.2, 14b.1, 14b.2 jeweils als Ring (z. B. Metallring) mit einer flachen Oberseite und einer keilförmigen und/oder spitz zulaufenden Unterseite ausgebildet sein. Bevorzugt dienen die Endabschnitte 14a.1, 14a.2, 14b.1, 14b.2 zum (z. B. gleichmäßigen) Verteilen einer äußeren Druckbeaufschlagung auf die Dichtungsmanschette 14a.3, 14b.3. Entsprechend können die Endabschnitte 14a.1, 14a.2, 14b.1, 14b.2 in diesem Zusammenhang auch als Stempel bezeichnet werden.

Die Dichtungsmanschette 14a.3, 14b.3 ist bevorzugt zwischen den zwei Endabschnitten 14a.1, 14a.2, 14b.1, 14b.2 angeordnet. Die zwei Endabschnitten 14a.1, 14a.2, 14b.1, 14b.2 können somit über die Dichtungsmanschette 14a.3, 14b.3 miteinander verbunden sein. Die Dichtungsmanschette 14a.3, 14b.3 kann (z. B. elastisch) verformbar und/oder flexibel ausgebildet sein. Beispielsweise kann die Dichtungsmanschette 14a.3, 14b.3 dazu aus Polytetrafluorethylen sein. Es ist allerdings auch möglich, dass die Dichtungsmanschette 14a.3, 14b.3 aus Metall oder einer Metalllegierung ist. Beispielsweise kann die Dichtungsmanschette 14a.3, 14b.3 aus Edelstahl und/oder Edelstahl-Kupfer sein und ggf. eine Silber-Beschichtung aufweisen. Ferner kann die Dichtungsmanschette 14a.3, 14b.3 einen im Wesentlichen X-förmigen Querschnitt (z. B. Profilquerschnitt) aufweisen. Hierbei können die zwei Endabschnitten 14a.1, 14a.2, 14b.1, 14b.2, vorzugsweise deren keilförmigen und/oder spitz zulaufenden Teile, jeweils in durch Schenkel des X-förmigen Querschnitts gebildete Kerben eingreifen. Entsprechend kann jeder der zwei Endabschnitten 14a.1, 14a.2, 14b.1, 14b.2, vorzugsweise über mehrere (z. B. voneinander räumlich getrennte) Anlageflächen, an der Dichtungsmanschette 14a.3, 14b.3 anliegen bzw. in direktem mechanischen Kontakt stehen. Durch eine (z. B. externe) Druckbeaufschlagung eines oder beider Endabschnitte 14a.1, 14a.2, 14b.1, 14b.2 in axialer Richtung kann die Dichtungsmanschette 14a.3, 14b.3 quer zur axialen Richtung (z. B. radial) auseinanderspreizbar sein. Beispielsweise kann Dichtungsmanschette 14a.3, 14b.3 ausgebildet sein, sich aufgrund des Axialdrucks der zwei Endabschnitten 14a.1, 14a.2, 14b.1, 14b.2 (z. B. elastisch) nach Innen und Außen zu verformen.

Wie vorstehend erwähnt, weist die Lichtwellenleiter-Durchführung 10 ferner eine Druckeinrichtung 15a, 15b auf (vgl. z. B. Figuren 3, 4 und 5). Diese kann mit dem mindestens einen Halteflansch 11a, 11b (z. B. lösbar) verbunden sein. Beispielsweise kann die Druckeinrichtung 15a, 15b an dem mindestens einen Halteflansch 11a, 11b angeschraubt und/oder anderweitig kraft- und/oder formschlüssig fixiert sein. Die Druckeinrichtung 15a, 15b ist hierbei ausgebildet, die Dichtungselemente 14a, 14b axial entlang den jeweiligen Durchgangsöffnungen 12a, 12b zu komprimieren. Beispielsweise kann die Druckeinrichtung 15a, 15b ausgebildet sein, auf die Dichtungselemente 14a, 14b jeweils eine entlang der jeweiligen Durchgangsöffnungen 12a, 12b orientierte Klemm- und/oder Druckkraft auf die Dichtungselemente 14a, 14b auszuüben. Bevorzugt ist die Druckeinrichtung 15a, 15b dabei ausgebildet, eine (z. B. über die Schraubverbindung mit dem mindestens einen Halteflansch 11a, 11b) einstellbare (axiale) Klemm- und/oder Druckkraft auf die Dichtungselemente 14a, 14b auszuüben. Die Klemm- und/oder Druckkraft, welche auch als Anpresskraft bezeichnet werden kann, kann dabei ins Innere des mindestens einen Halteflanschs 11a, 11b gerichtet sein. Durch das axiale Komprimieren kann bei den Dichtungselementen 14a, 14b ein radiales Expandieren induziert werden, vorzugsweise um dadurch die jeweiligen (in den Durchgangsöffnungen 12a, 12b aufgenommenen) Lichtwellenleiter 1 radial bzw. umfangsseitig zu verklemmen.

In diesem Zusammenhang kann die Druckeinrichtung 15a, 15b bspw. eine Druckplatte 15a.1, 15b.1 (z. B. eine Stahlplatte) umfassen, die an dem mindestens einen Halteflansch 11a, 11b (z. B. lösbar) befestigt sein kann (vgl. z. B. Figuren 3, 4 und 5). Beispielsweise kann die Druckplatte 15a.1, 15b.1mittels mehrerer Zylinderkopfschrauben am mindestens einen Halteflansch 11a, 11b angeschraubt sein. Bevorzugt ist die Druckplatte 15a.1, 15b.1 dazu ausgebildet, die Anpresskraft (gleichzeitig) auf mehrere der Dichtungselemente 14a, 14b auszuüben und/oder die Anpresskraft möglichst gleichmäßig auf mehrere der Dichtungselemente 14a, 14b zu verteilen.

Die Druckplatte 15a.1, 15b.1 kann aus Metall oder einer Metalllegierung sein. Beispielsweise kann die Druckplatte 15a.1, 15b.1 Aluminium, Edelstahl, Stahl, Messing und/oder Kupfer aufweisen. Zudem oder alternativ ist es allerdings auch möglich, dass die Druckplatte 15a.1, 15b.1aus Keramik, PEEK und/oder Vespel ist.

Die Druckplatte 15a.1, 15b.1 kann eine Vielzahl von Durchgangslöchern aufweisen. Die Durchgangslöcher können zur Durchführung der Vielzahl von Lichtwellenleitern 1 dienen bzw. die Lichtwellenleiter 1 können in den Durchgangslöchern aufgenommen sein. Die Vielzahl der Durchgangslöcher der Druckplatte 15a.1, 15b.1 kann dabei zur Vielzahl der Durchgangsöffnungen 12a, 12b des mindestens einen Halteflanschs 11a, 11b zueinander ausgerichtet sein. Beispielsweise können die Durchgangslöcher der Druckplatte 15a.1, 15b.1 und die Durchgangsöffnungen 12a, 12b des mindestens einen Halteflanschs 11a, 11b paarweise zueinander fluchtend ausgerichtet sein, vorzugsweise derart, dass jeweils einer der Lichtwellenleitern 1 geradlinig durch eines der Durchgangslöcher und eine der Durchgangsöffnungen 12a, 12b geführt werden kann.

Weiterhin kann die Druckeinrichtung 15a, 15b eine Vielzahl von Zwischenhülsen 15a.2, 15b.2 umfassen (vgl. z. B. Figur 4). Die Zwischenhülsen 15a.2, 15b.2 können jeweils z. B. aus Metall und/oder einer Metalllegierung sein. Beispielsweise können die Zwischenhülsen 15a.2, 15b.2 aus Messing und/oder Edelstahl gefertigt sein. Bevorzugt diesen die Zwischenhülsen 15a.2, 15b.2 zur Übertragung der Klemm- und/oder Druckkraft von der Druckplatte 15a, 15b auf die jeweiligen Dichtungselemente 14a, 14b. Hierzu kann jeweils eine der Zwischenhülsen 15a.2, 15b.2 in jeweils einer der Durchgangsöffnungen 12a, 12b angeordnet sein. Jede der Zwischenhülsen 15a.2, 15b.2 kann somit zwischen der Druckplatte 15a.1, 15b.1 und einem der Dichtungselemente 14a, 14b angeordnet sein. Beispielsweise kann jede der Zwischenhülsen 15a.2, 15b.2 ein erstes Ende aufweisen, das sich jeweils an einem der Dichtungselemente 14a, 14b abstützt, und ein zweites Ende aufweisen, das sich jeweils an der Druckplatte 15a.1, 15b.1 abstützt. Ferner kann jede der Zwischenhülsen 15a.2, 15b.2 (z. B. an ihrem ersten Ende) eine Fase 15f aufweisen (vgl. Figur 6). Beispielsweise kann jede der Zwischenhülsen 15a.2, 15b.2 (z. B. an ihrem ersten Ende) abgeschrägt sein. Mittels der entsprechenden Fasen 15f können die jeweiligen Flächen, an welchen die jeweiligen Dichtungselemente 14a, 14b (an den jeweiligen Zwischenhülsen 15a.2, 15b.2) anliegen, vergrößert werden. Weiterhin kann durch die jeweiligen Fasen 15f eine jeweilige Anzahl von Dichtflächen (z. B. von vier auf drei) reduziert werden. Zusätzlich oder alternativ ist es auch möglich, dass die Durchgangsöffnungen 12a, 12b und/oder die Dichtungsaufnahmen 13a, 13b entsprechende Fasen bzw. abgeschrägte Bereiche aufweisen, in die sich bspw. die Dichtungselemente 14a, 14b einpressen können bzw. eingepresst sind.

Zur Verbesserung der Dichtigkeit kann die Lichtwellenleiter-Durchführung 10 und/oder die Druckeinrichtung 15a, 15b ferner eine Vielzahl von weiteren Dichtungselementen 14b' umfassen (vgl. z. B. Figur 4). Jede der Durchgangsöffnungen 12a, 12b mit jeweils einem der weiteren Dichtungselemente 14b' der Vielzahl von weiteren Dichtungselementen 14b' versehen sein. D. h. jede der Durchgangsöffnungen 12a, 12b kann zusätzlich zum Dichtungselement 14a, 14b ein weiteres Dichtungselement 14b' aufweisen. Es ist jedoch auch möglich, dass nur ein Teil der Durchgangsöffnungen 12a, 12b entsprechende weitere Dichtungselemente 14b' aufweist. Bevorzugt ist jedes der weiteren Dichtungselemente 14b' in jeweils einer der Dichtungsaufnahmen 13a, 13b angeordnet, vorzugsweise zur druckdichten Aufnahme des durch die jeweiligen Durchgangsöffnungen 12a, 12b geführten Lichtwellenleiters 1. Die weiteren Dichtungselemente 14b' können ferner die Merkmale der Dichtungselemente 14a, 14b aufweisen. Beispielsweise können auch die weiteren Dichtungselemente 14b' aus einem Elastomer (wie z. B. Viton) und/oder aus einer Metalllegierung gefertigt sein und/oder als O-Ringe und/oder C-Ringe ausgebildet sein. Die weiteren Dichtungselemente 14b' können dabei gleich zu den Dichtungselementen 14a, 14b ausgebildet sein. Beispielsweise kann es sich bei den Dichtungselementen 14a, 14b und den weiteren Dichtungselementen 14b' um Gleichteile handeln. Die weiteren Dichtungselemente 14b' und die Dichtungselemente 14a, 14b können jedoch auch unterschiedlich ausgebildet sein, z. B. aus unterschiedlichen Materialien gefertigt sein.

Weiterhin kann die Lichtwellenleiter-Durchführung 10 und/oder die Druckeinrichtung 15a, 15b eine Vielzahl von weiteren Zwischenhülsen 15b.2' aufweisen (vgl. z. B. Figur 4). Dabei kann der Durchgangsöffnungen 12a, 12b mit jeweils einer der weiteren Zwischenhülse 15b.2' der Vielzahl von weiteren Zwischenhülsen 15b.2' versehen sein. D. h. jede der Durchgangsöffnungen 12a, 12b kann zusätzlich zur Zwischenhülse 15b.2 eine weitere Zwischenhülse 15b.2' aufweisen. Es ist jedoch auch möglich, dass nur ein Teil der Durchgangsöffnungen 12a, 12b entsprechende weitere Zwischenhülsen 15b.2' aufweist. Die weiteren Zwischenhülsen 15b.2' können jeweils zwischen einem Dichtungselement 14a, 14b und einem weiteren Dichtungselement 14b' angeordnet sein. Beispielsweise kann sich jede der weiteren Zwischenhülse 15b.2' jeweils an einem der Dichtungselemente 14a, 14b und einem der weiteren Dichtungselemente 14b' abstützen. Die weiteren Zwischenhülsen 15b.2' können dabei grundsätzlich die Merkmale der Zwischenhülsen 15a.2, 15b.2 aufweisen, bspw. aus Metall und/oder einer Metalllegierung gefertigt sein und/oder jeweils eine (weitere) Fase 15f' aufweisen. Weiterhin können die weiteren Zwischenhülsen 15b.2' und die Zwischenhülsen 15a.2, 15b.2 gleich bzw. als Gleichteile ausgebildet sein. Die weiteren Zwischenhülsen 15b.2' und die Zwischenhülsen 15a.2, 15b.2 können jedoch auch unterschiedlich ausgebildet sein, z. B. aus unterschiedlichen Materialien gefertigt sein.

In einer Ausführungsform weist der mindestens eine Halteflansch 11a, 11b einen ersten Halteflansch 11a (z. B. in Form eines CF-Flansches) und einen zweiten Halteflansch 11b (z. B. in Form eines CF-Flansches) auf (vgl. z. B. Figuren 1 bis 5). Entsprechend kann der mindestens eine Halteflansch 11a, 11b als ein Doppelflansch ausgebildet sein. Der erste Halteflansch 11a und der zweite Halteflansch 11b können dabei (z. B. lösbar) aneinander befestigt (z. B. miteinander verschraubt) sein. Hierfür kann der erste Halteflansch 11a einen ersten Lochkreis mit mehreren ersten Löchern umfassen und der zweite Halteflansch 11b einen zweiten Lochkreis mit mehreren zweiten Löchern umfassen. Bevorzugt entspricht hierbei eine Anzahl und Anordnung der ersten Löcher des ersten Lochkreises einer Anzahl und Anordnung der zweiten Löcher des zweiten Lochkreises. Die ersten und zweiten Löcher können bspw. paarweise zueinander fluchtend angeordnet sein.

Die jeweiligen ersten Löcher des ersten Halteflanschs 11a können jeweils ein (Innen-)Gewinde aufweisen. Ferner können die jeweiligen zweiten Löcher des zweiten Halteflanschs 11a jeweils eine Anlagefläche für einen Kopf eines Schraubelements 3 (z. B. für einen Kopf einer Zylinderkopfschraube) aufweisen (vgl. Figur 5). Mittels durch die jeweiligen zweiten Löcher geführter und in die jeweiligen Gewinde der ersten Löcher eingeschraubter Schraubelemente 3 können der erste Halteflansch 11a und der zweite Halteflansch 11b miteinander verbunden bzw. verschraubt sein.

Zur druckdichten Verbindung des ersten und zweiten Halteflanschs 11a, 11b können diese ferner jeweils entsprechende Dichtflächen aufweisen. Beispielsweise kann der erste Halteflansch 11a eine erste Dichtfläche und der zweite Halteflansch 11b eine zweite Dichtfläche aufweisen. Die erste Dichtfläche und zweite Dichtfläche können jeweils zur Aufnahme einer Doppelflanschdichtung (z. B. in Form eines Metalldichtrings) ausgebildet sein und/oder jeweils eine Schneide zum Einpressen in die bzw. eine Doppelflanschdichtung aufweisen. Entsprechend können erste und zweite Halteflanschs 11a, 11b über eine (z. B. an den jeweiligen Dichtflächen anliegende) Doppelflanschdichtung (z. B. druckdicht) miteinander verbunden sein. D. h., die Lichtwellenleiter-Durchführung 10 kann ferner eine Doppelflanschdichtung aufweisen, die zwischen dem ersten und zweiten Halteflanschs 11a, 11b angeordnet ist und in die vorzugsweise die jeweiligen Schneiden des ersten und zweiten Halteflanschs 11a, 11b eingepresst sind.

Der erste Halteflansch 11a und der zweite Halteflansch 11b können ferner Befestigungslöcher zur Befestigung des ersten und zweiten Halteflanschs 11a, 11b an der Vakuumkammer 30 aufweisen. Beispielsweise kann der erste Halteflansch 11a erste (z. B. den erste Halteflansch 11a vollständig durchdringende) Befestigungslöcher (z. B. gewindelose Durchgangsbohrungen) und der zweite Halteflansch 11b zweite (z. B. den zweiten Halteflansch 11b vollständig durchdringende) Befestigungslöcher (z. B. gewindelose Durchgangsbohrungen) aufweisen. Die ersten und zweiten Befestigungslöcher können paarweise fluchtend zueinander angeordnet sein. Die ersten und zweiten Befestigungslöcher können den Halteflanschlochkreis zur Befestigung des mindestens einen Halteflanschs 11a, 11b an der Vakuumkammer 30 bilden. Lediglich beispielhaft können die ersten Befestigungslöcher dabei jeweils zwischen zwei der ersten Löcher des ersten Lochkreises und die zweiten Befestigungslöcher jeweils zwischen zwei der zweiten Löcher des zweiten Lochkreises angeordnet sein (vgl. Figur 1).

Der erste Halteflansch 11a und der zweite Halteflansch 11b können zumindest abschnittsweise voneinander beabstandet sein. Entsprechend kann zwischen dem ersten Halteflansch 11a und dem zweiten Halteflansch 11b ein (z. B. evakuierbarer) Zwischenraum 16 angeordnet bzw. vorgesehen sein (vgl. z. B. Figuren 3-5). Dieser Zwischenraum 16 kann zumindest abschnittsweise von dem ersten und zweiten Halteflansch 11a, 11b gegrenzt sein. Ferner kann der Zwischenraum 16 durch die Doppelflanschdichtung begrenzt sein. Der Zwischenraum 16 kann ferner nicht rotationssymmetrisch ausgebildet sein. Beispielsweise kann ein oberer Teil des Zwischenraums 16 (in axialer Richtung) eine geringere Ausdehnung als ein unterer Teil der Teil des Zwischenraums 16 aufweisen. Der Zwischenraum 16 kann (z. B. mittels einer Vakuumpumpe, insbesondere Drehschieberpumpe) evakuierbar sein. Beispielsweise kann der Zwischenraum 16 auf einen Druck unter 0.1 mbar, vorzugsweise unter 0.01 mbar evakuierbar sein. Hierfür kann der erste Halteflansch 11a und/oder der zweite Halteflansch 11b eine Abpumpöffnung mit einem Stutzen 19 zum Anschluss einer Vakuumpumpe umfassen. Über die Abpumpöffnung bzw. den Stutzen 19 kann die Vakuumpumpe fluidisch mit dem Zwischenraum 16 verbindbar sein. Bevorzugt ist der Stutzen 19 dabei als KF-Stutzen (zur Aufnahme einer KF-Dichtung) ausgebildet.

Im Fall, dass der mindestens eine Halteflansch 11a, 11b als Doppelflansch ausgebildet ist bzw. einen ersten Halteflansch 11a und einen zweiten Halteflansch 11b umfasst, kann die Vielzahl von Durchgangsöffnungen 12a, 12b eine (erste) Vielzahl von ersten Durchgangsöffnungen 12a und eine (zweite) Vielzahl von zweiten Durchgangsöffnungen 12b aufweisen. Die (erste) Vielzahl von ersten Durchgangsöffnungen 12a kann dabei an dem ersten Halteflansch 11a angeordnet sein bzw. der erste Halteflansch 11a kann die (erste) Vielzahl von ersten Durchgangsöffnungen 12a aufweisen. Ferner kann die (zweite) Vielzahl von zweiten Durchgangsöffnungen 12b an dem zweiten Halteflansch 11b angeordnet sein bzw. kann der zweite Halteflansch 11b die (zweite) Vielzahl von zweiten Durchgangsöffnungen 12b aufweisen.

Die ersten Durchgangsöffnungen 12a und die zweiten Durchgangsöffnungen 12b können hierbei (z. B. fluchtend) zueinander ausgerichtet sein. Beispielsweise können die ersten Durchgangsöffnungen 12a des ersten Halteflanschs 11a und die zweiten Durchgangsöffnungen 12b des zweiten Halteflanschs 11b paarweise in einer Flucht zueinander angeordnet sein, vorzugsweise zur geradlinigen Aufnahme eines der Lichtwellenleiter 1. Weiterhin können die ersten Durchgangsöffnungen 12a des ersten Halteflanschs 11a und die zweiten Durchgangsöffnungen 12b des zweiten Halteflanschs 11b durch den Zwischenraum 16 voneinander getrennt und/oder voneinander beabstandet sein. Entsprechend kann sich ein in dem mindestens einen Halteflansch 11a, 11b aufgenommener Lichtwellenleiter 1 zunächst durch eine der ersten Durchgangsöffnungen 12a des ersten Halteflanschs 11a, anschließend durch den Zwischenraum 16 und letztlich durch eine der zweiten Durchgangsöffnungen 12a des zweiten Halteflanschs 11b erstrecken.

Bevorzugt weisen die jeweiligen Lichtwellenleiter 1 dabei im Bereich des ersten und zweiten Halteflanschs 11a, 11b bzw. in den Bereichen, in denen die jeweiligen Lichtwellenleiter 1 durch die erste und zweite Durchgangsöffnung 12a, 12b geführt sind, einen Metallmantel 1a, 1b auf. Jeder der in der Lichtwellenleiter-Anordnung 20 aufgenommenen Lichtwellenleiter 1 kann somit einen, vorzugsweise zweiteilige, Metallmantel 1a, 1b aufweisen. Beispielsweise kann jeder der Lichtwellenleiter 1 einen (z. B. im Bereich des ersten Halteflanschs 11a angeordnete) ersten Metallmantel 1a und einen (z. B. im Bereich des zweiten Halteflanschs 11b angeordnete) zweiten Metallmantel 1b aufweisen. Der erste und zweite Metallmantel 1a, 1b können voneinander durch einen nicht ummantelten Abschnitt des Lichtwellenleiter 1, welcher bevorzugt im Bereich des Zwischenraums 16 angeordnet ist, voneinander beabstandet sein. Der erste und zweite Metallmantel 1a, 1b können an den jeweiligen Lichtwellenleiter 1 (z. B. mittels Epoxidharz) angeklebt sein. Hierbei ist bevorzugt darauf zu achten, dass der Kleber aufgrund der kurzen Distanz zwischen den beiden Metallmänteln 1a und 1b keine umhüllende Schicht im Zwischenraum 16 bzw. am nicht ummantelten Abschnitt des Lichtwellenleiter 1 bildet. Alternativ können der erste und zweite Metallmantel 1a, 1b auch an eine (z. B. abschnittsweise) Metallbeschichtung der jeweiligen Lichtwellenleiter 1 angelötet sein. Lediglich beispielhaft können im Fall, dass Lichtwellenleiter 1 mit einem Außendurchmesser von 2 mm verwendet werden, der erste und zweite Metallmantel 1a, 1b jeweils einen Innendurchmesser von 3 mm aufweisen. Um ein Einführen der Lichtwellenleiter 1 in die Lichtwellenleiter-Durchführung 10 zu erleichtern kann der erste und/oder zweite Metallmantel 1a, 1b (z. B. an einem jeweiligen Endbereich) konisch verjüngt sein und/oder eine Fase (von z. B. 60°) aufweisen.

Jede der ersten Durchgangsöffnungen 12a kann jeweils mit einer ersten Dichtungsaufnahme 13a versehen sein bzw. eine erste Dichtungsaufnahme 13a aufweisen. Ferner kann der zweiten Durchgangsöffnungen 12b jeweils mit einer zweiten Dichtungsaufnahme 13b versehen sein bzw. eine zweite Dichtungsaufnahme 13b aufweisen. Entsprechend kann die Vielzahl von Dichtungsaufnahme 13a, 13b eine (erste) Vielzahl von ersten Dichtungsaufnahmen 13a und eine (zweite) Vielzahl von zweiten Dichtungsaufnahmen 13b aufweisen. Die ersten Dichtungsaufnahmen 13a können dabei jeweils einer der ersten Durchgangsöffnungen 12a des ersten Halteflanschs 11a angeordnet und/oder ausgebildet sein. Ferner können die zweiten Dichtungsaufnahmen 13b jeweils einer der zweiten Durchgangsöffnungen 12b des zweiten Halteflanschs 11b angeordnet und/oder ausgebildet sein.

In jede der ersten Dichtungsaufnahmen 13a kann jeweils ein erstes Dichtungselement 14a angeordnet und/oder aufgenommen sein (vgl. Figur 4). Entsprechend kann in jede der zweiten Dichtungsaufnahmen 13b jeweils ein zweites Dichtungselement 14b angeordnet und/oder aufgenommen sein. Die Vielzahl von Dichtungselementen 14a, 14b kann somit eine (erste) Vielzahl von ersten Dichtungselementen 14a und eine (zweite) Vielzahl von zweiten Dichtungselementen 14b aufweisen. Die ersten Dichtungselemente 14a und zweiten Dichtungselemente 14b können als Gleichteile ausgebildet sein. Die ersten Dichtungselemente 14a und zweiten Dichtungselemente 14b können jedoch auch unterschiedlich ausgebildet sein. Beispielsweise können die ersten Dichtungselemente 14a jeweils aus Metall und die zweiten Dichtungselemente 14b jeweils aus Viton gefertigt sein. Weiterhin können bspw. die die ersten Dichtungselemente 14a jeweils als (z. B. einteilige) Dichtungsringe (z. B. Dichtungs-O-Ringe) ausgebildet sein und die zweiten Dichtungselemente 14b jeweils mehrteilig (z. B. jeweils aufweisend zwei (zweite) Endabschnitte 14b.1, 14b.2 und eine (zweite) Dichtungsmanschette 14b.3) ausgebildet sein.

Im Fall, dass der mindestens eine Halteflansch 11a, 11b als Doppelflansch ausgebildet ist bzw. einen ersten Halteflansch 11a und einen zweiten Halteflansch 11b umfasst, kann die mindestens eine Druckeinrichtung 15a, 15b eine erste Druckeinrichtung 15a und eine zweite Druckeinrichtung 15b aufweisen. Die erste Druckeinrichtung 15a kann dabei dem ersten Halteflansch 11a zugeordnet und/oder an dem ersten Halteflansch 11a befestigt sein. Beispielsweise kann die erste Druckeinrichtung 15a (zumindest abschnittsweise) an einer dem Inneren der Vakuumkammer 30 zugewandten (Innen-)Seite des ersten Halteflanschs 11a angeordnet sein. Demgegenüber kann die zweite Druckeinrichtung 15b dem zweiten Halteflansch 11b zugeordnet und/oder an dem zweiten Halteflansch 11b befestigt sein. Beispielsweise kann die zweite Druckeinrichtung 15b (zumindest abschnittsweise) an einer der Umgebung zugewandten (Außen-)Seite des zweiten Halteflanschs 11b angeordnet sein.

Die erste und zweite Druckeinrichtung 15a, 15b können dabei jeweils die vorstehend bereits beschriebenen Komponenten aufweisen, wobei der Zusatz "erste" angeben soll, dass die entsprechende Komponente an dem ersten Halteflansch 11a angeordnet bzw. diesem zugeordnet ist, und der Zusatz "zweite" angeben soll, dass die entsprechende Komponente an dem zweiten Halteflansch 11b angeordnet bzw. diesem zugeordnet ist. Zur Vermeidung von Wiederholungen wird daher im Folgenden lediglich nochmals exemplarisch auf einzelne Aspekte eingegangen.

Beispielsweise kann die erste Druckeinrichtung 15a eine erste Druckplatte 15a.1 aufweisen. Die erste Druckplatte 15a.1 kann dabei an dem ersten Halteflansch 11a (z. B. lösbar) befestigt sein und/oder eine Vielzahl von ersten Durchgangslöchern für die Vielzahl von Lichtwellenleitern 1 aufweisen. Ferner kann auch die zweite Druckeinrichtung 15b eine zweite Druckplatte 15b.1 aufweisen. Die zweite Druckplatte 15b.1 an dem zweiten Halteflansch 11b (z. B. lösbar) befestigt sein und/oder eine Vielzahl von zweiten Durchgangslöchern für die Vielzahl von Lichtwellenleitern 1 aufweisen. Bevorzugt sind die ersten und zweiten Durchgangslöcher dabei paarweise zueinander fluchtend ausgerichtet sein, sodass jeder der Lichtwellenleiter 1 jeweils geradlinig durch eines der ersten Durchgangslöcher und eines der zweiten Durchgangslöcher führbar ist bzw. geführt ist.

Weiterhin kann die erste Druckeinrichtung 15a eine erste Vielzahl von ersten Zwischenhülsen 15a.2 aufweisen (vgl. Figur 4). Hierbei kann jeweils eine der ersten Zwischenhülsen 15a.2 in jeweils einer der ersten Durchgangsöffnungen 12a angeordnet sein. Beispielsweise kann jede der ersten Zwischenhülsen 15a.2 zwischen der ersten Druckplatte 15a.1 und einem der ersten Dichtungselemente 14a angeordnet sein. Zudem oder alternativ kann auch die zweite Druckeinrichtung 15b eine zweite Vielzahl von zweiten Zwischenhülsen 15b.2 aufweisen. Jeweils eine der zweiten Zwischenhülsen 15b.2 kann dabei in jeweils einer der zweiten Durchgangsöffnungen 12b angeordnet sein. Beispielsweise kann jede der zweiten Zwischenhülsen 15b.2 zwischen der zweiten Druckplatte 15b.1 und einem der zweiten Dichtungselemente 14b angeordnet sein.

Zur Verbesserung der Dichtigkeit kann die erste Druckeinrichtung 15a eine Vielzahl von weiteren ersten Dichtungselementen (nicht dargestellt) und/oder eine Vielzahl von weiteren ersten Zwischenhülse (nicht dargestellt) aufweisen. Hierbei kann jede der ersten Durchgangsöffnungen 12a mit jeweils einem der weiteren ersten Dichtungselemente und/oder einer der weiteren ersten Zwischenhülsen versehen sein. Zudem oder alternativ kann auch die zweite Druckeinrichtung 15b eine Vielzahl von weiteren zweiten Dichtungselementen 14b' (z. B. O-Ringe und/oder C-Ringe) und/oder eine Vielzahl von weiteren zweiten Zwischenhülse 15b.2' aufweisen. Jede der zweiten Durchgangsöffnungen 12a kann dabei mit jeweils einem der weiteren zweiten Dichtungselemente 14b' und/oder einer der weiteren zweiten Zwischenhülsen 15b.2' versehen sein.

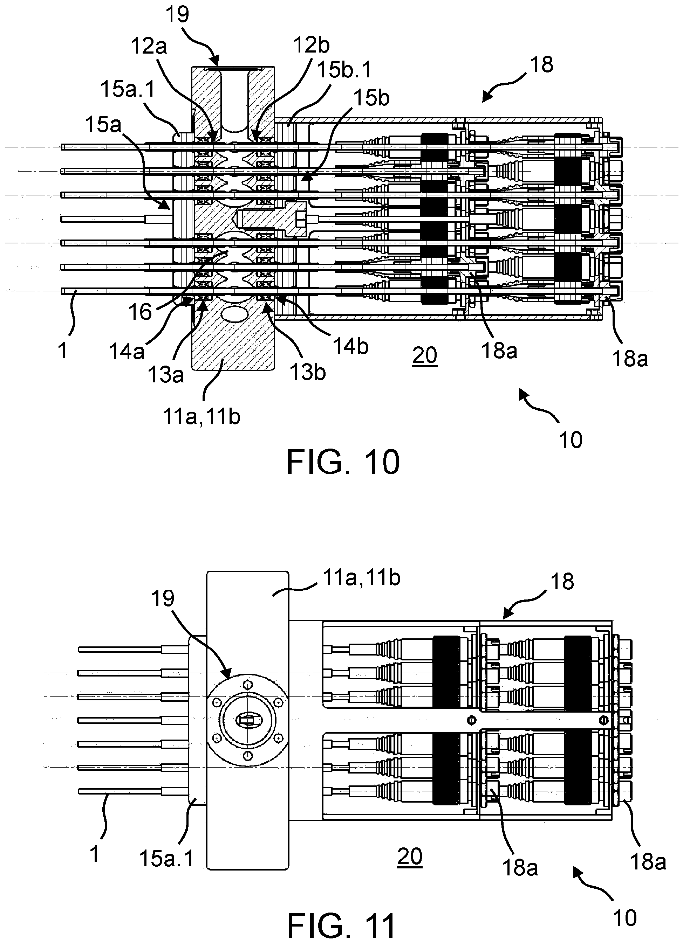

In einer weiteren Ausführungsform, welche unter Bezugnahme auf die Figuren 9-21 eingehender beschrieben werden wird, ist es auch möglich, dass der Doppelflansch integral-einstückig ausgebidelt ist. Anstelle einer vorstehend beschriebenen mechanischen Verbindung des ersten und zweiten Halteflanschs 11a, 11b, kann der mindestens eine Halteflansch 11a, 11b bzw. der Doppelflansch bspw. mittels 3D-Drucktechnik bzw. additiver Fertigung gefertigt sein. Der ersten und zweiten Halteflanschs 11a, 11b können somit "quasi aus einem Guss" hergestellt sein und/oder integral-einstückig miteinander verbunden sein. In dieser Variante können sodann der erste und zweite Lochkreis sowie die Doppelflanschdichtung entfallen bzw. nicht vorhanden sein. Die weiteren vorstehend beschriebenen Merkmale können allerdings auch im Fall, dass der mindestens eine Halteflansch 11a, 11b integral-einstückig ausgebidelt ist, vorhanden sein. Insbesondere soll vorzugsweise, wie bspw. in den Figuren 10, 14, 15 und 16 erkennbar ist, der Zwischenraum 16 weiterhin vorhanden sein. Mit anderen Worten kann der mindestens eine Halteflansch 11a, 11b einstückig ausgebildet sein und einen evakuierbaren Zwischenraum 16 aufweisen, der bevorzugt innerhalb des mindestens eine Halteflansch 11a, 11b ausgebildet ist. Wie vorstehend erwähnt, können über diesen Zwischenraum 16 die ersten Durchgangsöffnungen 12a des mindestens einen Halteflanschs 11a und die zweiten Durchgangsöffnungen 12b des mindestens einen Halteflanschs 11a voneinander getrennt und/oder voneinander beabstandet sein.

Um ferner eine möglichst hohe Anzahl von Lichtwellenleitern 1 in der Lichtwellenleiter-Durchführung 10 aufzunehmen, kann - wie für den beispielhaften Fall eines CF63-Flanschs in den Figuren 9-11 sowie 20 und 21 dargestellt ist - die Vielzahl von Wellenleiterkupplungen 18a der Kupplungseinrichtung 18 in mehreren (z.B. zwei) Ebenen versetzt zueinander angeordnet sein. Beispielsweise kann eine erste Teilmenge (z. B. zwanzig) der Vielzahl von Wellenleiterkupplungen 18a einen geringeren Abstand zur zweiten Druckplatte 15b.1 als eine zweite Teilmenge (z. B. sechzehn) der Vielzahl von Wellenleiterkupplungen 18a aufweisen.

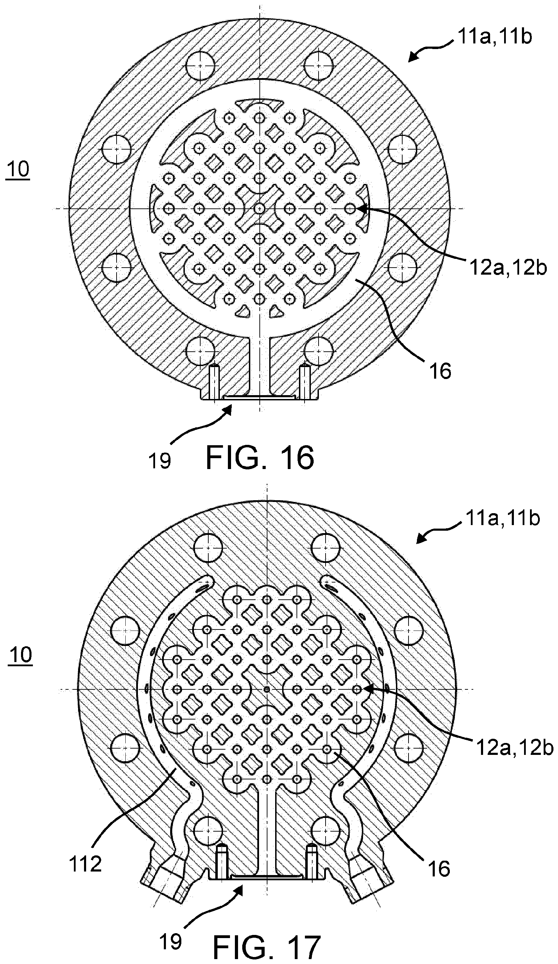

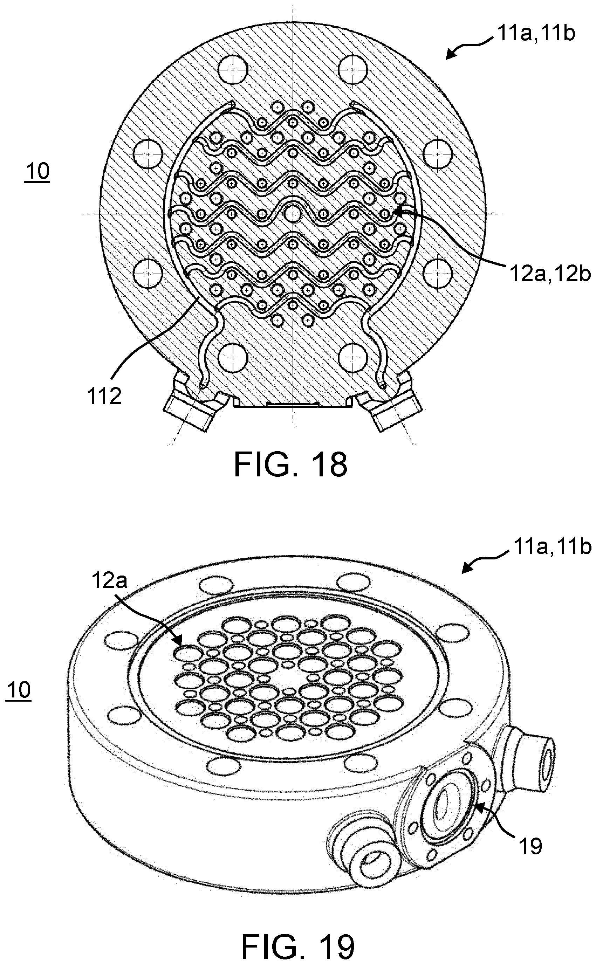

Weiterhin ist es möglich, dass der mindestens eine Halteflansch 11a, 11b einen Kühlkanal 112 aufweisen kann (vgl. Figuren 17-21). Der Kühlkanal 112 kann von einem, vorzugsweise flüssigen, Kühlmedium (z.B. Wasser) durchströmbar sein. Hierzu können am mindestens einen Halteflansch 11a, 11b entsprechende Anschlüsse zum Anschluss von Kühlleitungen vorhanden sein, wobei die Anschlüsse mit dem Kühlkanal 112 fluidisch verbunden sind. Der Kühlkanal 112 kann im Inneren des mindestens einen Halteflanschs 11a, 11b bzw. im Inneren des ersten und/oder zweiten Halteflanschs 11a angeordnet sein. Der Kühlkanal 112 kann bspw. im Zuge der additiven Fertigung in den mindestens einen Halteflansch 11a, 11b eingebracht (z. B. gedruckt) werden. Der Kühlkanal 112 kann an den Dichtungsaufnahmen 13a, 13b einen Durchmesser von etwa 1,5 mm aufweisen. Der Kühlkanal 112 kann innerhalb des mindestens einen Halteflanschs 11a, 11b mäanderförmig verlaufen und/oder sich in ein Kühlkanalleitungsnetz verzweigen (vgl. Figur 18). Lediglich beispielhaft kann das Kühlkanalleitungsnetz zwei (z. B. bogenförmige) Hauptkühlkanäle aufweisen, die über mehrere (z. B. mäanderförmige) Kühlkanalstichleitungen miteinander fluidisch verbunden sind. Durch die aktive Kühlung der Dichtstellen können auf vorteilhafte Weise der Einsatz niedrig schmelzender Materialien (z. B. Weichlot) zur Dichtung bzw. zur Ummantelung der Lichtwellenleiter 1 verwendet werden, welche ansonsten während eines Montage- und/oder Ausheizvorgangs beschädigt werden würden.

Um ein Einführen der Lichtwellenleiter-Durchführung 10 in die Vakuumkammer 30 bzw. in den Vakuumflansch der Vakuumkammer 30 zu vereinfachen, kann die Lichtwellenleiter-Durchführung 10 - unabhängig von der konkreten Ausgestaltung des mindestens einen Halteflanschs 11a, 11b - ferner einen Rohrabschnitt 111 aufweisen, der sich von der Lichtwellenleiter-Durchführung 10 (z. B. in Richtung der Vakuumkammer 30) wegerstreckt (vgl. Figuren 3 und 5). Beispielweise kann der Rohrabschnitt 111 einen ersten Endbereich aufweisen, der mit dem ersten Halteflansch 11a und/oder der ersten Druckplatte 15a.1 des ersten Halteflanschs 11a (z. B. lösbar) verbunden ist, und einen freien zweiten Endbereich aufweisen. Der Rohrabschnitt 111 kann dabei die erste Druckplatte 15a.1 und/oder die Lichtwellenleiter 1 zumindest abschnittsweise (z. B. umfangsseitig) umgeben. Entsprechend kann der Rohrabschnitt 111 zum Schutz der Lichtwellenleiter 1 bei der Montage/Demontage dienen.

Weiterhin kann die Lichtwellenleiter-Durchführung 10 eine Stützeinrichtung 17 aufweisen (vgl. Figuren 3 und 5). Bevorzugt dient die Stützeinrichtung 17 zur (zusätzlichen) Abstützung und/oder Lagerung der Lichtwellenleiter 1. Hierzu kann die Stützeinrichtung 17 beabstandet von dem ersten Halteflansch 11a auf Seiten der Vakuumkammer 30 angeordnet sein. Bevorzugt weist die Stützeinrichtung 17 somit einen größeren Abstand zum zweiten Halteflansch 11b als zum ersten Halteflansch 11a auf. Die Stützeinrichtung 17 kann bspw. als Stützplatte ausgebildet sein und/oder aus Polyetheretherketon gefertigt sein. Die Stützeinrichtung 17 über den Rohrabschnitt 111 an dem ersten Halteflansch 11a und/oder an der ersten Druckplatte 15a.1 des ersten Halteflanschs 11a verbunden sein. Lediglich beispielhaft kann die Stützeinrichtung 17 (z. B. im Bereich abgerundeter Ecken der Stützeinrichtung 17) mit dem Rohrabschnitt 111 verschraubt sein. Entsprechend kann der Rohrabschnitt die Stützeinrichtung 17 zumindest abschnittsweise (z. B. umfangsseitig) umgeben. Die Stützeinrichtung 17 kann eine Vielzahl von Halteöffnungen 17a zur Aufnahme der Lichtwellenleiter 1 aufweisen. Bevorzugt sind die Halteöffnungen 17a dazu mit den ersten Durchgangsöffnungen 12a des ersten Halteflanschs 11a und den zweiten Durchgangsöffnungen 12b des zweiten Halteflanschs 11b ausgerichtet. Entsprechend können sich die jeweiligen Lichtwellenleiter 1 jeweils geradlinig durch eine der Halteöffnungen 17a der Stützeinrichtung 17, eine der ersten Durchgangsöffnungen 12a des ersten Halteflanschs 11a und eine der zweiten Durchgangsöffnungen 12b des zweiten Halteflanschs 11b erstrecken. Durch das Vorsehen der Stützeinrichtung 17 können auf vorteilhafte Weise Bewegungen der Lichtwellenleiter 1 bzw. mechanische Belastungen im Klebestellenbereich der Lichtwellenleiter 1 möglichst vermieden werden.

Ferner kann die Lichtwellenleiter-Durchführung 10 eine Kupplungseinrichtung 18 (z. B. eine FC-Stecker-Kupplungseinrichtung) aufweisen (vgl. Figuren 1 bis 5). Bevorzugt dient die Kupplungseinrichtung 18 zum Verbinden bzw. Koppeln der Lichtwellenleiter 1 mit (externen) weiteren Lichtwellenleitern. Hierzu kann die Kupplungseinrichtung 18 kann auf Seiten der Umgebung der Vakuumkammer 30 beabstandet von dem zweiten Halteflansch 11b angeordnet sein. Bevorzugt weist die Kupplungseinrichtung 18 somit einen größeren Abstand zum ersten Halteflansch 11a als zum zweiten Halteflansch 11b auf. Hierbei kann die Kupplungseinrichtung 18 über eine Verlängerung (z. B. in Form eines Hohlprofils und/oder Blechgehäuses) an dem zweiten Halteflansch 11b und/oder an der Druckplatte 15b.1 des zweiten Halteflanschs 11b befestigt sein. Die Kupplungseinrichtung 18 kann ferner eine Vielzahl von Wellenleiterkupplungen 18a (z. B. in Form entsprechender Buchsen) zum Anschluss der externen Lichtwellenleiter (z. B. zum Anschluss externer Lichtwellenleiterstecker) aufweisen. Beispielsweise kann die Kupplungseinrichtung 18 eine Halteplatte aufweisen, an dem die Wellenleiterkupplungen 18a (z. B. mittels Senkkopfschrauben) befestigt sind. Lediglich beispielhaft können die Wellenleiterkupplungen 18a jeweils als FC-Kupplungen und/oder zur Ausbildung einer Steckverbindung mit FC-Steckern ausgebildet sein. Hierbei können die Lichtwellenleiter 1 jeweils einen FC-Stecker aufweisen, welche z. B. auf einer der Vakuumkammer 30 bzw. dem mindestens einen Halteflansch 11a, 11b zugewandten Seite der Kupplungseinrichtung 18 mit den jeweiligen Wellenleiterkupplungen 18a verbunden sind. Ferner können auf einer der Umgebung zugewandten Seite der Kupplungseinrichtung 18 die jeweiligen Wellenleiterkupplungen 18a mit FC-Steckern der externen Lichtwellenleiter verbindbar sein. Bevorzugt sind die Wellenleiterkupplungen 18a mit den ersten Durchgangsöffnungen 12a des ersten Halteflanschs 11a, den zweiten Durchgangsöffnungen 12b des zweiten Halteflanschs 12b und/oder den Halteöffnungen 17a der Stützeinrichtung 17 ausgerichtet.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbei-spiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Au-ßengrenzen des jeweiligen Bereichs

## Patentansprüche

1. Lichtwellenleiter-Durchführung (10), die zur Durchführung einer Vielzahl von Lichtwellenleitern (1) zwischen einem Inneren einer evakuierbaren Vakuumkammer (30) und einer Umgebung der Vakuumkammer (30) eingerichtet ist, umfassend:
- mindestens einen Halteflansch (11a, 11b), der zur druckdichten Befestigung an der Vakuumkammer (30) eingerichtet ist und eine Vielzahl von Durchgangsöffnungen (12a, 12b) aufweist, die jeweils zur druckdichten Aufnahme von jeweils einem Lichtwellenleiter (1) der Vielzahl von Lichtwellenleitern (1) eingerichtet sind,
**dadurch gekennzeichnet, dass**
- die Durchgangsöffnungen (12a, 12b) jeweils mit einer Dichtungsaufnahme (13a, 13b) und einem Dichtungselement (14a, 14b), das in der Dichtungsaufnahme (13a, 13b) zur druckdichten Aufnahme des jeweiligen Lichtwellenleiters (1) angeordnet ist, versehen sind, und
- mit jedem Halteflansch (11a, 11b) jeweils eine Druckeinrichtung (15a, 15b) verbunden ist, die ausgebildet ist, die jeweiligen Dichtungselemente (14a, 14b) axial entlang den jeweiligen Durchgangsöffnungen (12a, 12b) zu komprimieren, vorzugsweise um dadurch ein radiales Expandieren der jeweiligen Dichtungselemente (14a, 14b) zu bewirken.

2. Lichtwellenleiter-Durchführung (10) gemäß Anspruch 1, wobei
- der mindestens eine Halteflansch (11a, 11b) einen ersten Halteflansch (11a), der zur druckdichten Befestigung an der Vakuumkammer (30) eingerichtet ist, und einen zweiten Halteflansch (11b), der druckdicht an dem ersten Halteflansch (11a) befestigt ist, umfasst.

3. Lichtwellenleiter-Durchführung (10) gemäß Anspruch 2, wobei
- erste Durchgangsöffnungen (12a) des ersten Halteflanschs (11a) der Vielzahl von Durchgangsöffnungen (12a, 12b) und zweite Durchgangsöffnungen (12b) des zweiten Halteflanschs (11b) der Vielzahl von Durchgangsöffnungen (12a, 12b) zueinander ausgerichtet sind.

4. Lichtwellenleiter-Durchführung (10) gemäß Anspruch 2 oder 3, wobei
- zwischen dem ersten Halteflansch (11a) und dem zweiten Halteflansch (11b) ein evakuierbarer Zwischenraum (16) vorgesehen ist.

5. Lichtwellenleiter-Durchführung (10) gemäß einem der Ansprüche 2 bis 4, ferner umfassend
- eine Stützeinrichtung (17), die auf Seiten der Vakuumkammer (30) beabstandet von dem ersten Halteflansch (11a) angeordnet ist und eine Vielzahl von Halteöffnungen (17a) aufweist, die mit den ersten Durchgangsöffnungen (12a) des ersten Halteflanschs (11a) und den zweiten Durchgangsöffnungen (12b) des zweiten Halteflanschs (11b) ausgerichtet sind.

6. Lichtwellenleiter-Durchführung (10) gemäß einem der Ansprüche 2 bis 5, ferner umfassend
- eine Kupplungseinrichtung (18), die auf Seiten der Umgebung der Vakuumkammer (30) beabstandet von dem zweiten Halteflansch (11b) angeordnet ist und eine Vielzahl von Wellenleiterkupplungen (18a) zum Anschluss externer Lichtwellenleiter aufweist, die mit den ersten Durchgangsöffnungen (12a) des ersten Halteflanschs (11a) und den zweiten Durchgangsöffnungen (12b) des zweiten Halteflanschs (11b) ausgerichtet sind.

7. Lichtwellenleiter-Durchführung (10) gemäß einem der vorhergehenden Ansprüche, wobei jede Druckeinrichtung (15a, 15b) aufweist:
- eine Druckplatte (15a.1, 15b.1), die an dem jeweiligen Halteflansch (11a, 11b) befestigt ist; und/oder
- eine Vielzahl von Zwischenhülsen (15a.2, 15b.2) zur Übertragung von Druckkraft von der Druckplatte (15a.1, 15b.1) auf die jeweiligen Dichtungselemente (14a, 14b).

8. Lichtwellenleiter-Durchführung (10) gemäß Anspruch 7, wobei
- in den Durchgangsöffnungen (12a, 12b) jeweils ein weiteres Dichtungselement (14b') und eine weitere Zwischenhülse (15b.2') angeordnet ist.

9. Lichtwellenleiter-Durchführung (10) gemäß Anspruch 7 oder 8, wobei
- jede der Zwischenhülsen (15a.2, 15b.2) an einer zu dem jeweiligen Dichtungselement (14a, 14b) weisenden Seite der jeweiligen Zwischenhülse (15a.2, 15b.2) eine Fase aufweist; und/oder
- jede der weiteren Zwischenhülsen (15b.2') an einer zu dem jeweiligen weiteren Dichtungselement (14b') weisenden weiteren Seite der jeweiligen weiteren Zwischenhülse (15b.2') eine weitere Fase aufweist.

10. Lichtwellenleiter-Durchführung (10) gemäß einem der vorhergehenden Ansprüche, wobei
- die jeweiligen Dichtungselemente (14a, 14b) mindestens eines von einem Elastomer und einem Metall umfassen; und/oder
- die jeweiligen Dichtungselemente (14a, 14b) jeweils einen Dichtungsring, vorzugsweise Dichtungs-O-Ring, aufweisen.

11. Lichtwellenleiter-Durchführung (10) gemäß einem der vorhergehenden Ansprüche, wobei
- die jeweiligen Dichtungselemente (14a, 14b) jeweils aufweisen: zwei, vorzugsweise metallische, Endabschnitte (14a.1, 14a.2, 14b.1, 14b.2) und eine, vorzugsweise verformbare, Dichtungsmanschette (14a.3, 14b.3), die zwischen den zwei Endabschnitten (14a.1, 14a.2, 14b.1, 14b.2) angeordnet ist, wobei vorzugsweise:
die Dichtungsmanschette (14a.3, 14b.3) aus Polytetrafluorethylen ist; und/oder
die Dichtungsmanschette (14a.3, 14b.3), mittels 3D-Drucktechnik hergestellt ist; und/oder
die Dichtungsmanschette (14a.3, 14b.3), einen im Wesentlichen X-förmigen Querschnitt; und/oder
die Endabschnitte jeweils ringförmig ausgebildet sind und/oder eine geschlossene Form aufweisen; und/oder
die Endabschnitte (14a.1, 14a.2, 14b.1, 14b.2) jeweils zumindest abschnittsweise keilförmig ausgebildet sind und in die Dichtungsmanschette (14a.3, 14b.3) eingreifen, vorzugsweise um bei einer axialen Druckbeaufschlagung eines der Endabschnitte (14a.1, 14a.2, 14b.1, 14b.2) die Dichtungsmanschette (14a.3, 14b.3) radial auseinanderzuspreizen.

12. Lichtwellenleiter-Anordnung (20), die zur druckdichten Befestigung an einer Vakuumkammer (30) eingerichtet ist, umfassend
- eine Lichtwellenleiter-Durchführung (10) gemäß einem der vorhergehenden Ansprüche, und
- eine Vielzahl von Lichtwellenleitern (1), die jeweils in einer der Durchgangsöffnungen (12a, 12b) angeordnet sind.

13. Lichtwellenleiter-Anordnung (20) gemäß Anspruch 12, bei der
- die Lichtwellenleiter (1) der Vielzahl von Lichtwellenleitern (1) im Bereich der Lichtwellenleiter-Durchführung (10) jeweils einen Metallmantel (1a, 1b) aufweisen.

14. Lichtwellenleiter-Anordnung (20) gemäß einem der Ansprüche 12 bis 13, wobei
- in einer Durchgangsöffnungsteilmenge der Vielzahl von Durchgangsöffnungen (12a, 12b) keine Lichtwellenleiter (1) angeordnet sind, und
- in der Durchgangsöffnungsteilmenge druckdichte Blindstopfen angeordnet sind.

15. Verfahren zur Durchführung einer Vielzahl von Lichtwellenleitern (1) zwischen einem Inneren einer evakuierbaren Vakuumkammer (30) und einer Umgebung der Vakuumkammer (30), wobei die Lichtwellenleiter-Durchführung (10) gemäß einem der Ansprüche 1 bis 11 verwendet wird, mit den Schritten
- Positionierender Lichtwellenleitern (1) der Vielzahl von Lichtwellenleitern (1) in den Durchgangsöffnungen (12a, 12b) des mindestens einen Halteflanschs (11a, 11b),
- Komprimieren der Dichtungselemente (14a, 14b) in den Dichtungsaufnahmen (13a, 13b) der Durchgangsöffnungen (12a, 12b) axial entlang den jeweiligen Durchgangsöffnungen (14a, 14b), und
- Evakuieren der Vakuumkammer (30).
